(19) Europäisches Patentamt
European Patent Office
Office européen des brevets

(11) EP 4 257 640 B1

(12) **EUROPEAN PATENT SPECIFICATION**

(45) Date of publication and mention of the grant of the patent:
**28.08.2024 Bulletin 2024/35**

(21) Application number: **22166438.6**

(22) Date of filing: **04.04.2022**

(51) International Patent Classification (IPC):
***C08L 23/14*** *(2006.01)*

(52) Cooperative Patent Classification (CPC):
(C-Sets available)
**C08L 23/142;** C08F 4/65908; C08F 4/65912; C08F 4/65916; C08F 210/06; C08F 2420/07; C08L 2203/18; C08L 2207/02; C08L 2308/00

(Cont.)

(54) **PIPE COMPRISING A POLYPROPYLENE COMPOSITION**

ROHR AUS EINER POLYPROPYLENZUSAMMENSETZUNG

TUYAU COMPRENANT UNE COMPOSITION DE POLYPROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.10.2023 Bulletin 2023/41**

(73) Proprietor: **Borealis AG**
**1020 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **LESKINEN, Pauli**
  **06101 Porvoo (FI)**
- **ALBRECHT, Andreas**
  **4021 Linz (AT)**
- **HUBNER, Gerhard**
  **4021 Linz (AT)**
- **RUEMER, Franz**
  **4021 Linz (AT)**

(74) Representative: **Maiwald GmbH**
**Elisenhof**
**Elisenstraße 3**
**80335 München (DE)**

(56) References cited:
**EP-A1- 2 914 658** **EP-B1- 2 914 658**
**EP-B1- 2 989 159** **US-A1- 2011 293 867**
**US-A1- 2021 363 314** **US-A1- 2021 395 512**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

(Cont. next page)

(52) Cooperative Patent Classification (CPC): (Cont.)

C-Sets
**C08F 210/06, C08F 2/001;**
**C08L 23/142, C08L 23/0815;**
C08F 210/06, C08F 4/6492;
C08F 210/06, C08F 4/65927;
C08F 210/06, C08F 210/14, C08F 2500/34,
C08F 2500/12, C08F 2500/27, C08F 2500/35,
C08F 2500/24, C08F 2500/18, C08F 2500/37

## Description

The present invention relates to a pipe comprising a polypropylene composition, which comprises a copolymer of propylene with comonomer units derived from 1-butene or 1-hexene and a copolymer of ethylene with comonomer units derived from 1-butene and/or 1-hexene, a process for producing said pipe and the use of said polypropylene composition for the production of a pipe.

## Technical background

Polypropylene materials are frequently used for various pipe applications, such as fluid transport during which the fluid is pressurized and/or heated. In particular, polypropylene materials are used in applications for plumbing and heating, such as in-house hot and cold water pressure pipes and fittings, floor and wall heating systems and radiator connections.

In this regard, propylene copolymers are especially suitable for pressure pipe applications for hot water and industrial pipes since propylene copolymers are featured by good impact performance, stiffness, creep resistance, slow crack properties and long term pressure resistance.

It is well known that increasing the impact properties has a detrimental effect on the stiffness and vice versa. For high pressure pipes, however, a good balance between impact properties and stiffness is mandatory to ensure sufficient pressure resistance against internal pressure. Additionally, excellent processability of the propylene copolymer material is required in order to facilitate pipe extrusion as well as injection moulding of fittings. To increase the stiffness of a propylene copolymer material to the required level, the amount of comonomer in the polymer can be decreased which, however, has a negative effect on the toughness of the material. Especially propylene copolymer grades for hot and cold water applications often do not have satisfactory impact resistance, particularly at low temperatures.

EP 3 567 061 A1 discloses a polypropylene composition comprising a single site catalyzed propylene 1-hexene random copolymer suitable for pressure pipe applications. These pipes show a good balance of properties in regard of stiffness and pressure resistance but rather low impact strength.

Accordingly, there is a need in the art for propylene copolymer materials showing an improved impact behavior without sacrificing the stiffness and pressure resistance.

The present invention is based on the finding that superior pipe properties can be achieved by a polypropylene composition comprising a copolymer of propylene with comonomer units derived from 1-butene or 1-hexene, which is polymerized in the presence of a single site catalyst system, and a copolymer of ethylene with comonomer units derived from 1-butene and/or 1-hexene.

## Summary of the invention

The present invention relates to a pipe comprising a polypropylene composition, wherein the polypropylene composition comprises

(A) from 70 to 95 wt.-%, based on the total weight of the polypropylene composition, of a copolymer of propylene with comonomer units derived from 1-butene or 1-hexene having

- a total comonomer content of from 0.5 to 5.0 wt.-%;
- a melt flow rate $MFR_2$ of from 0.10 to 2.0 g/10 min, determined according to ISO 1133 at a load of 2.16 kg and a temperature of 230°C; and
- a ratio of weight average molecular weight to number average molecular weight Mw/Mn of from 2.5 to 6.0, determined by Gel Permeation Chromatography (GPC) according to ISO 16014-4:2003 and ASTM D 6474-99; and

(B) from 5 to 30 wt.-%, based on the total weight of the polypropylene composition, of a copolymer of ethylene with comonomer units derived from 1-butene and/or 1-hexene having

- a total comonomer content of from 1.0 to 25.0 wt.-%;
- a density of from 910.0 to 940.0 kg/$m^3$, determined according to ISO 1183; and
- a melt flow rate $MFR_2$ of from 0.05 to 3.0 g/10 min, determined according to ISO 1133 at a load of 2.16 kg and a temperature of 190°C;

wherein the polypropylene composition has a melt flow rate $MFR_2$ of from 0. 1 to 1.0 g/10 min, determined according to ISO 1133 at a load of 2.16 kg and a temperature of 230°C.

Further, the present invention relates to a process for producing a pipe as described above or below comprising the steps of

a) polymerizing propylene and 1-butene or 1-hexene in a multistage process in the presence of a single site catalyst system to obtain the copolymer of propylene with comonomer units derived from 1-butene or 1-hexene (A);
b) blending the copolymer of propylene (A) with the copolymer of ethylene with comonomer units derived from 1-butene and/or 1-hexene (B) to obtain the polypropylene composition; and
c) forming the pipe from the polypropylene composition.

Still further, the present invention relates to the use of a polypropylene composition having a melt flow rate $MFR_2$ of from 0.1 to 1.0 g/10 min, determined according to ISO 1133 at a load of 2.16 kg and a temperature of 230°C, and comprising

(A) from 70 to 95 wt.-%, based on the total weight of the polypropylene composition, of a copolymer of propylene with comonomer units derived from 1-butene or 1-hexene having

- a total comonomer content of from 0.5 to 5.0 wt.-%;
- a melt flow rate $MFR_2$ of from 0.10 to 2.0 g/10 min, determined according to ISO 1133 at a load of 2.16 kg and a temperature of 230°C; and
- a ratio of weight average molecular weight to number average molecular weight Mw/Mn of from 2.5 to 6.0, determined by Gel Permeation Chromatography (GPC) according to ISO 16014-4:2003 and ASTM D 6474-99; and

(B) from 5 to 30 wt.-%, based on the total weight of the polypropylene composition, of a copolymer of ethylene with comonomer units derived from 1-butene and/or 1-hexene having

- a total comonomer content of from 1.0 to 25.0 wt%;
- a density of from 910.0 to 940.0 kg/$m^3$, determined according to ISO 1183; and
- a melt flow rate $MFR_2$ of from 0.05 to 3.0 g/10 min, determined according to ISO 1133 at a load of 2.16 kg and a temperature of 190°C,

for the production of a pipe.

The introduction of the copolymer of ethylene (B) as described above or below in amounts of 5 to 30 wt.-% to the polypropylene composition surprisingly increases the impact properties of the resulting pipes as can be seen from the Charpy notched impact strength test and pipe impact test without impairing the pressure resistance in the pressure resistance test. The stiffness is still acceptable as indicated in by a slightly lower but acceptable flexural modulus.

**Definitions**

A propylene random copolymer is a copolymer of propylene monomer units and comonomer units - in the present case 1-butene or 1-hexene comonomer units - in which the comonomer units are distributed randomly over the polypropylene chain. Thereby, a propylene random copolymer includes a fraction, which is insoluble in xylene - xylene cold insoluble (XCI) fraction - in an amount of at least 90 wt%, more preferably of at least 95 wt%, still more preferably of at least 96 wt%, based on the total amount of propylene random copolymer. Accordingly, the propylene random copolymer does not contain an elastomeric polymer phase dispersed therein.

A propylene homopolymer is a polymer, which essentially consists of propylene monomer units. Due to impurities especially during commercial polymerization processes a propylene homopolymer can comprise up to 0.1 mol-% comonomer units, preferably up to 0.05 mol-% comonomer units and most preferably up to 0.01 mol-% comonomer units.

An 'ethylene homopolymer' denotes a polymer consisting essentially of ethylene monomer units. Due to the requirements of large-scale polymerization it may be possible that the ethylene homopolymer includes minor amounts of comonomer units, which usually is below 0.1 mol%-, preferably below 0.05 mol-%, most preferably below 0.01 mol-% of the ethylene homopolymer.

A polymer is denoted 'copolymer of ethylene' if the polymer is derived from ethylene monomer units and at least one alpha-olefin comonomer. The alpha-olefin comonomer is selected from 1-butene and/or 1-hexene. A polymer with ethylene monomer units and comonomer units derived from 1-butene and 1-hexene is denoted 'terpolymer of ethylene'.

Ethylene polymers are usually classified by means of their density e.g. as low density polyethylenes (LDPE), linear low density polyethylenes (LLDPE), medium density polyethylenes (MDPE) and high density polyethylenes

(HDPE). In literature polyethylenes prepared in the presence of a polymerization catalyst with a density of 910 to 945 $kg/m^3$ are usually classified as linear low density polyethylenes (LLDPE) or medium density polyethylenes (MDPE).

A polymer comprising more than one fraction differing from each other in at least one property, such as weight average molecular weight or comonomer content, is called "multimodal". If the multimodal polymer includes two different fractions, it is called "bimodal" and, correspondingly, if it includes three different fractions, it is called "trimodal". The form of the molecular weight distribution curve, i.e. the appearance of the graph of the polymer weight fraction as function of its molecular weight, of such a multimodal polymer will show two or more maxima depending on the modality or at least be distinctly broadened in comparison with the curves of the individual fractions.

In contrast to "multimodal" a unimodal polypolymer shows only one maximum in the graph of the polymer weight fraction as function of its molecular weight and a uniform comonomer distribution.

In the following, amounts are given as % by weight (wt.-%) unless it is stated otherwise.

**Detailed description**

In a first aspect the present invention relates to a pipe comprising a polypropylene composition, wherein the polypropylene composition comprises

(A) from 70 to 95 wt.-%, based on the total weight of the polypropylene composition, of a copolymer of propylene with comonomer units derived from 1-butene or 1-hexene having

- a total comonomer content of from 0.5 to 5.0 wt.-%;
- a melt flow rate $MFR_2$ of from 0.10 to 2.0 g/10 min, determined according to ISO 1133 at a load of 2.16 kg and a temperature of 230°C; and
- a ratio of weight average molecular weight to number average molecular weight Mw/Mn of from 2.5 to 6.0, determined by Gel Permeation Chromatography (GPC) according to ISO 16014-4:2003 and ASTM D 6474-99; and

(B) from 5 to 30 wt.-%, based on the total weight of the polypropylene composition, of a copolymer of ethylene with comonomer units derived from 1-butene and/or 1-hexene having

- a total comonomer content of from 1.0 to 25.0 wt.-%;
- a density of from 910.0 to 940.0 $kg/m^3$, determined according to ISO 1183; and
- a melt flow rate $MFR_2$ of from 0.05 to 3.0 g/10 min, determined according to ISO 1133 at a load of 2.16 kg and a temperature of 190°C;

wherein the polypropylene composition has a melt flow rate $MFR_2$ of from 0.1 to 1.0 g/10 min, determined according to ISO 1133 at a load of 2.16 kg and a temperature of 230°C.

The pipe shows an improved balance of properties in regard of stiffness, impact properties and pressure resistance.

It is preferred that the pipe has a pipe pressure test stability of at least 5000 h, more preferably of at least 5750 h, determined according to ISO 1167-1 and -2 at a temperature of 95 °C and a hoop stress of 4.6 MPa.

The upper limit is usually not more than 15000 h, preferably not more than 12500 h.

It is further preferred that the pipe has a pipe pressure test stability of at least 5 h, more preferably at least 10 h, determined according to ISO 1167-1 and -2 at a temperature of 20 °C and a hoop stress of 16 MPa.

Further, the pipe preferably shows no break in the pipe impact test at 0°C according to ISO 9854-2.

The pipe therefore qualifies as pressure pipe, preferably a pressure pipe for hot and cold water.

The pipe comprises the polypropylene composition preferably in an amount of 90 to 100 wt.- %, more preferably of 95 to 100 wt.-%, based on the total weight of the pipe. In a preferred embodiment the pipe consists of the polypropylene composition.

The polypropylene composition comprises the copolymer of propylene (A) and the copolymer of ethylene (B).

The polypropylene composition can further comprise further polymeric components, which differ from the copolymer of propylene (A) and the copolymer of ethylene (B). The amount of said further polymeric components is usually in the amount of 0 to 10 wt.-%, preferably of 0 to 5 wt.-%.

It is preferred that the copolymer of propylene (A) and the copolymer of ethylene (B) are the only polymeric components of the polypropylene composition.

The polypropylene composition can further comprise non-polymeric components such as additives. Examples of such additives are, among others, antioxidants, process stabilizers, UV-stabilizers, pigments, fillers, antistatic additives, antiblock agents, nucleating agents and acid scavengers.

Suitable antioxidants and stabilizers are, for instance, 2,6-di-tert-butyl-p-cresol, tetrakis-[methylene-3-(3',5-di-tert-butyl-4'hydroxyphenyl)propionate]methane, octadecyl-3-3(3'5'-di-tert-butyl-4'-hydroxyphenyl)propionate, dilaurylthiodipropionate, distearylthiodipropionate, tris-(nonylphenyl)phosphate, distearyl-pentaerythritol-diphosphite and tetrakis(2,4-di-tert-butylphenyl)-4,4'-biphenylene-diphosphonite.

Some hindered phenols are sold under the trade names of Irganox 1076 and Irganox 1010. Commercially available blends of antioxidants and process stabilizers are also available, such as Irganox B225 marketed by Ciba-Geigy.

Suitable acid scavengers are, for instance, metal stearates, such as calcium stearate and zinc stearate. They are used in amounts generally known in the art, typically from 500 ppm to 10000 ppm and preferably from 500 to 5000 ppm.

The polypropylene composition preferably has a polymer fraction eluting at a temperature between 31 and 80°C excluding a purge fraction and a logM between 4.5 and 6.0 in an amount of 4 to 25 wt%, more preferably in an amount of 6 to 20 wt%, still more preferably in an amount of 8 to 15 wt%, determined by Crossfractionation Chromatography (CFC).

Further, the polypropylene composition preferably has a profile comprising two peaks in the Temperature Rising Elution Fractionation (TREF) elugram obtained from the Crossfractionation Chromatography (CFC) analysis, wherein a first peak Tp(1) preferably elutes between 45 and 90°C, more preferably between 50 and 80°C, still more preferably between 55 and 70°C, and a second peak Tp(2) preferably elutes between 85 and 100°C, more preferably between 87 and 99°C, still more preferably between 90 and 98°C.

The polypropylene composition preferably has a xylene cold solubles (XCS) content of from 1.0 to 3.5 wt.-%, more preferably from 1.2 to 3.2 wt.-%, still more preferably from 1.5 to 3.0 wt.-%, determined according to ISO 16152.

Further, the polypropylene composition preferably has a first melting temperature Tm1 of 135 to 145°C, more preferably from 137°C to 142°C, determined according to ISO 11357 / part 3.

Additionally, the polypropylene composition preferably has a second melting temperature Tm2 of 115 to 130°C, more preferably from 117°C to 125°C, determined according to ISO 11357 / part 3.

Tm1 is usually higher than Tm2.

Still further, the polypropylene composition preferably has a crystallization temperature Tc of 100 to 110°C, more preferably from 102 to 107°C, determined according to ISO 11357 / part 3.

Additionally, the polypropylene composition preferably has a first melting enthalpy Hm1 of from 30 to 45 J/g, more preferably from 32 to 42 J/g, determined according to ISO 11357 / part 3.

Further, the polypropylene composition preferably has a second melting enthalpy Hm2 of from 35 to 50 J/g, more preferably from 37 to 47 J/g, determined according to ISO 11357 / part 3.

Hm1 is usually lower than Hm2.

The polypropylene composition shows a high impact strength at acceptable stiffness.

It is preferred that the polypropylene composition has a flexural modulus of from 700 to 1000 MPa, more preferably from 800 to 950 MPa, still more preferably from 850 to 925 MPa, determined according to ISO 178 on injection moulded test specimens prepared according to EN ISO 1872-2.

Still further, the polypropylene composition preferably has a Charpy notched impact strength at 23°C of from 7.5 to 15.0 kJ/$m^2$, more preferably from 8.5 to 14.0 kJ/$m^2$, still more preferably from 9.5 to 13.0 kJ/$m^2$.

Additionally, the polypropylene composition preferably has a Charpy notched impact strength at 0°C of from 2.5 to 5.0 kJ/$m^2$, more preferably from 3.0 to 4.5 kJ/$m^2$, still more preferably from 3.0 to 4.0 kJ/$m^2$.

Further, the polypropylene composition preferably has a Charpy notched impact strength at - 20°C of from 1.5 to 4.0 kJ/$m^2$, more preferably from 1.7 to 3.5 kJ/$m^2$, still more preferably from 1.8 to 3.0 kJ/$m^2$.

The Charpy notched impact strength at 23°C, 0°C and -20°C is determined according to ISO 179 1eA on injection moulded test specimens prepared according to EN ISO 1872-2.

The polypropylene composition comprises the copolymer of propylene (A) in an amount of from 70 to 95 wt.-%, preferably from 75 to 93 wt.-%, more preferably from 80 to 90 wt.-%, based on the total weight of the polypropylene composition.

The copolymer of propylene (A) is a copolymer of propylene with comonomer units derived from 1-butene or 1-hexene. Preferably the copolymer of propylene (A) is a copolymer of propylene with comonomer units derived from 1-hexene.

The term 'a copolymer of propylene with comonomer units derived from 1-butene' indicates that the copolymer of propylene (A) contains only units derivable from propylene and 1-butene.

The term 'a copolymer of propylene with comonomer units derived from 1-hexene' indicates that the copolymer of propylene (A) contains only units derivable from propylene and 1-hexene.

The copolymer of propylene (A) has a total comonomer content, i.e. a content of comonomer units derived from 1-butene or 1-hexene, of from 0.5 to 5.0 wt.-%, more preferably from 1.0 to 4.0 wt.-%, still more preferably from 2.0 to 3.0 wt.-%, based on the total weight of the copolymer of propylene (A).

It is preferred that the comonomer units are randomly distributed in the polymeric chains of the copolymer of propylene (A). Thus, the copolymer of propylene (A) is preferably a random copolymer of propylene.

The copolymer of propylene (A) further has a melt flow rate $MFR_2$ of from 0.10 to 2.0 g/10 min, preferably from 0.15 to 1.5 g/10 min, more preferably from 0.20 to 1.0 g/10 min, determined according to ISO 1133 at a load of 2.16 kg and a temperature of 230°C.

Still further, the copolymer of propylene (A) has a ratio of weight average molecular weight to number average molecular weight Mw/Mn of from 2.5 to 6.0, preferably from 3.0 to 5.5, still more preferably from 3.5 to 5.0, determined by Gel Permeation Chromatography (GPC) according to ISO 16014-4:2003 and ASTM D 6474-99.

It is preferred that the copolymer of propylene (A) has a xylene cold solubles (XCS) content of from 0.2 to 2.5 wt.-%, more preferably from 0.5 to 2.3 wt.-%, determined according to ISO 16152.

The copolymer of propylene (A) preferably has a melting temperature Tm of 135 to 145°C, determined according to ISO 11357 / part 3.

Further, copolymer of propylene (A) preferably has a crystallization temperature Tc of 100 to 105°C, determined according to ISO 11357 / part 3.

Still further, copolymer of propylene (A) preferably has a melting enthalpy Hm of from 70 to 80 J/g, determined according to ISO 11357 / part 3.

The copolymer of propylene (A) is obtainable by polymerization in the presence of a single site catalyst system.

The catalyst system preferably includes

(i) a catalyst having the following structure

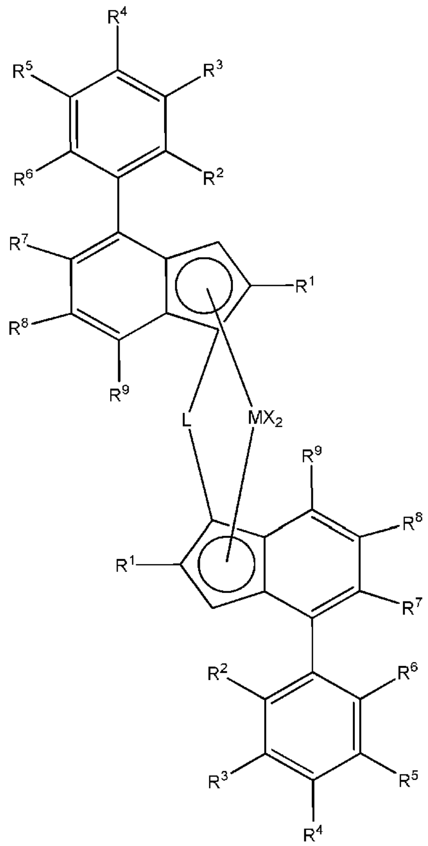

wherein

M is zirconium or hafnium;
each X independently is a sigma -donor ligand
L is a bridge of formula $-(ER^{10}_2)_y-$;
y is 1 or 2;
E is C or Si;
each $R^{10}$ is independently a $C_1$-$C_{20}$-hydrocarbyl group, tri($C_1$-$C_{20}$ alkyl)silyl group, $C_6$-$C_{20}$ aryl group, $C_7$-$C_{20}$ arylalkyl group or $C_7$-$C_{20}$ alkylaryl group or L is an alkylene group such as methylene or ethylene;
$R^1$ are each independently the same or are different from each other and are a $CH_2$-$R^{11}$ group, with $R^{11}$ being H or linear or branched $C_1$-$C_6$ alkyl group, $C_3$-$C_8$ cycloalkyl group, $C_6$-$C_{10}$ aryl group;

$R^3$, $R^4$ and $R^5$ are each independently the same or different from each other and are H or a linear or branched $C_1$-$C_6$ alkyl group, $C_7$-$C_{20}$ arylalkyl group, $C_7$-$C_{20}$ alkylaryl group, or $C_6$-$C_{20}$ aryl group with the proviso that if there are four or more $R^3$, $R^4$ and $R^5$ groups different from H present in total, one or more of $R^3$, $R^4$ and $R^5$ is other than tert butyl; $R^7$ and $R^8$ are each independently the same or different from each other and are H, a $CH_2$-$R^{12}$ group, with $R^{12}$ being H or linear or branched $C_1$-$C_6$ alkyl group, $SiR^{13}_3$, $GeR^{13}_3$, $OR^{13}$, $SR^{13}$, $NR^{13}_2$, wherein $R^{13}$ is a linear or branched $C_1$-$C_6$ alkyl group, $C_7$-$C_{20}$ alkylaryl group and $C_7$-$C_{20}$ arylalkyl group or $C_6$-$C_{20}$ aryl group,

$R^9$ are each independently the same or different from each other and are H or a linear or branched $C_1$-$C_6$ alkyl group; and

$R^2$ and $R^6$ all are H; and

(ii) a cocatalyst system comprising an aluminoxane cocatalyst.

It should be stressed that, in some instances the use of such a cocatalyst system may not be required.

The catalyst system can be used in non-supported form or in solid form. The catalyst system of the invention may be used as a homogeneous catalyst system or heterogeneous catalyst system.

The catalyst system in solid form, preferably in solid particulate form can be either supported on an external carrier material, like silica or alumina, or, in a particularly preferred embodiment, is free from an external carrier, however still being in solid form. For example, the solid catalyst system is obtainable by a process in which

(a) a liquid/liquid emulsion system is formed, said liquid/liquid emulsion system comprising a solution of the catalyst components (i) and (ii) dispersed in a solvent so as to form dispersed droplets; and
(b) solid particles are formed by solidifying said dispersed droplets.

Particular complexes of the invention include:

*Rac-anti*-dimethylsilanediyl[2-methyl-4-(4-*tert*-butylphenyl)-5,6,7-trihydro-*s*-indacen-1-yl][2-methyl-4-(4-*tert*-butylphenyl)-5-methoxy-6-tert-butylindenyl zirconium dichloride or dimethyl,
*Rac-anti*-dimethylsilanediyl[2-*iso*-butyl-4-(4-*tert*-butylphenyl)-5,6,7-trihydro-*s*-indacen-1-yl][2-methyl-4-(4-tert-butylphenyl)-5-methoxy-6-tert-butylindenyl zirconium dichloride or dimethyl,
*Rac-anti*-dimethylsilanediyl[2-*neo*-pentyl-4-(4-*tert*-butylphenyl)-5,6,7-trihydro-*s*-indacen-1-yl][2-methyl-4-(4-tert-butylphenyl)-5-methoxy-6-tert-butylindenyl zirconium dichloride or dimethyl,
*Rac-anti*-dimethylsilanediyl[2-benzyl-4-(4-*tert*-butylphenyl)-5,6,7-trihydro-*s*-indacen-1-yl][2-methyl-4-(4-tert-butylphenyl)-5-methoxy-6-tert-butylindenyl zirconium dichloride or dimethyl,
*Rac-anti*-dimethylsilanediyl[2-cyclohexylmethyl-4-(4-*tert*-butylphenyl)-5,6,7-trihydro-*s*-indacen-1-yl][2-methyl-4-(4-*tert*-butylphenyl)-5-methoxy-6-tert-butylindenyl zirconium dichloride or dimethyl,
*Race-anti*-dimethylsilanediyl[2-methyl-4-(3,5-dimethylphenyl)-5,6,7-trihydro-*s*-indacen-1-yl][2-methyl-4-(3,5-dimethylphenyl)-5-methoxy-6-tert-butylindenyl zirconium dichloride or dimethyl,
*Rac-anti*-dimethylsilanediyl[2-*iso*-butyl-4-(3,5-dimethylphenyl)-5,6,7-trihydro-*s*-indacen-1-yl][2-methyl-4-(3,5-dimethylphenyl)-5-methoxy-6-tert-butylindenyl zirconium dichloride or dimethyl,
*Rac-anti*-dimethylsilanediyl[2-*neo*-pentyl-4-(3,5-dimethylphenyl)-5,6,7-trihydro-*s*-indacen-1-yl][2-methyl-4-(3,5-dimethylphenyl)-5-methoxy-6-tert-butylindenyl zirconium dichloride or dimethyl,
*Rac-anti*-dimethylsilanediyl[2-benzyl-4-(3,5-dimethylphenyl)-5,6,7-trihydro-*s*-indacen-1-yl][2-methyl-4-(3,5-dimethylphenyl)-5-methoxy-6-tert-butylindenyl zirconium dichloride or dimethyl, and
*Rac-anti*-dimethylsilanediyl[2-cyclohexylmethyl-4-(3,5-dimethylphenyl)-5,6,7-trihydro-*s*-indacen-1-yl][2-methyl-4-(3,5-dimethylphenyl)-5-methoxy-6-tert-butylindenyl zirconium dichloride or dimethyl.

The catalysts have been described inter alia in WO2015/011135 which is incorporated by reference herewith. A particularly preferred catalyst is catalyst number 3 of WO2015/011135. The preparation of the metallocenes has been described in WO2013/007650 which is incorporated by reference herewith. The complex preparation of the particular preferred catalyst has been described as E2 in WO2013/007650.

For the avoidance of doubt, any narrower definition of a substituent offered above can be combined with any other broad or narrowed definition of any other substituent.

Throughout the disclosure above, where a narrower definition of a substituent is presented, that narrower definition is deemed disclosed in conjunction with all broader and narrower definitions of other substituents in the application.

The ligands required to form the complexes and hence catalysts/catalyst system can be synthesized by any process and the skilled organic chemist would be able to devise various synthetic protocols for the manufacture of the

necessary ligand materials. For Example WO2007/116034 discloses the necessary chemistry. Synthetic protocols can also generally be found in WO2002/02576, WO2011/135004, WO2012/084961, WO2012/001052, WO2011/076780 and WO2015/158790. The examples section also provides the skilled person with sufficient direction.

As stated above a cocatalyst system is not always required. However, when used, the cocatalyst system comprises an aluminoxane cocatalyst.

The aluminoxane cocatalyst can be one of formula (X):

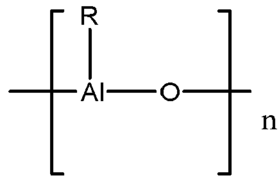

(X)

where n is usually from 6 to 20 and R has the meaning below.

Aluminoxanes are formed on partial hydrolysis of organoaluminum compounds, for example those of the formula $AlR_3$, AlRzY and $Al_2R_3Y_3$ where R can be, for example, $C_1$-$C_{10}$ alkyl, preferably $C_1$-$C_5$ alkyl, or $C_3$-$C_{10}$-cycloalkyl, $C_7$-$C_{12}$-arylalkyl or alkylaryl and/or phenyl or naphthyl, and where Y can be hydrogen, halogen, preferably chlorine or bromine, or $C_1$-$C_{10}$ alkoxy, preferably methoxy or ethoxy. The resulting oxygen-containing aluminoxanes are not in general pure compounds but mixtures of oligomers of the formula (X).

The preferred aluminoxane is methylaluminoxane (MAO). Since the aluminoxanes used according to the invention as cocatalysts are not, owing to their mode of preparation, pure compounds, the molarity of aluminoxane solutions hereinafter is based on their aluminium content.

The molar ratio of Al in the aluminoxane to the metal ion of the metallocene may be in the range 1:1 to 2000:1 mol/mol, preferably 10:1 to 1000:1, and more preferably 50:1 to 500:1 mol/mol.

The cocatalyst system can additionally comprise a boron containing cocatalyst.

Boron based cocatalysts of interest include those of formula (Z)

$BY_3$ (Z)

wherein Y independently is the same or can be different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred examples for Y are methyl, propyl, isopropyl, isobutyl or trifluoromethyl, unsaturated groups such as aryl or haloaryl like phenyl, tolyl, benzyl groups, p-fluorophenyl, 3,5- difluorophenyl, pentachlorophenyl, pentafluorophenyl, 3,4,5-trifluorophenyl and 3,5-di(trifluoromethyl)phenyl. Preferred options are trifluoroborane, triphenylborane, tris(4-fluorophenyl)borane, tris(3,5-difluorophenyl)borane, tris(4-fluoromethylphenyl)borane, tris(2,4,6-trifluorophenyl)borane, tris(penta-fluorophenyl)borane, tris(tolyl)borane, tris(3,5-dimethyl-phenyl)borane, tris(3,5-difluorophenyl)borane and/or tris (3,4,5-trifluorophenyl)borane.

Particular preference is given to tris(pentafluorophenyl)borane.

Borates can be used, i.e. compounds containing a borate 3+ ion. Such ionic cocatalysts preferably contain a non-coordinating anion such as tetrakis(pentafluorophenyl)borate and tetraphenylborate. Suitable counterions are protonated amine or aniline derivatives such as methylammonium, anilinium, dimethylammonium, diethylammonium, N-methylanilinium, diphenylammonium, N,N-dimethylanilinium, trimethylammonium, triethylammonium, tri-n-butylammonium, methyldiphenylammonium, pyridinium, p-bromo-N,N- dimethylanilinium or p-nitro-N,N-dimethylanilinium.

Preferred ionic compounds which can be used according to the present invention include: triethylammoniumtetra(phenyl)borate,

tributylammoniumtetra(phenyl)borate,
trimethylammoniumtetra(tolyl)borate,
tributylammoniumtetra(tolyl)borate,
tributylammoniumtetra(pentafluorophenyl)borate,
tripropylammoniumtetra(dimethylphenyl)borate,
tributylammoniumtetra(trifluoromethylphenyl)borate,
tributylammoniumtetra(4-fluorophenyl)borate,
N,N-dimethylcyclohexylammoniumtetrakis(pentafluorophenyl)borate,
N,N-dimethylbenzylammoniumtetrakis(pentafluorophenyl)borate,

N,N-dimethylaniliniumtetra(phenyl)borate,
N,N-diethylaniliniumtetra(phenyl)borate,
N,N-dimethylaniliniumtetrakis(pentafluorophenyl)borate,
N,N-di(propyl)ammoniumtetrakis(pentafluorophenyl)borate,
di(cyclohexyl)ammoniumtetrakist(pentafluorophenyl)borate,
triphenylphosphoniumtetrakis(phenyl)borate,
triethylphosphoniumtetrakis(phenyl)borate,
diphenylphosphoniumtetrakis(phenyl)borate,
tri(methylphenyl)phosphoniumtetrakis(phenyl)borate,
tri(dimethylphenyl)phosphoniumtetrakis(phenyl)borate,
triphenylcarbeniumtetrakis(pentafluorophenyl)borate,
or ferroceniumtetrakis(pentafluorophenyl)borate.
Preference is given to triphenylcarbeniumtetrakis(pentafluorophenyl) borate,
N,N- dimethylcyclohexylammoniumtetrakis(pentafluorophenyl)borate or
N,N- dimethylbenzylammoniumtetrakis(pentafluorophenyl)borate.

Suitable amounts of cocatalyst will be well known to the skilled man.

The molar ratio of boron to the metal ion of the metallocene may be in the range 0.5:1 to 10:1 mol/mol, preferably 1:1 to 10:1, especially 1:1 to 5:1 mol/mol.

The catalyst can be used in supported or unsupported form. The particulate support material used is preferably an organic or inorganic material, such as silica, alumina or zirconia or a mixed oxide such as silica-alumina, in particular silica, alumina or silica-alumina. The use of a silica support is preferred. The skilled man is aware of the procedures required to support a metallocene catalyst.

Especially preferably the support is a porous material so that the complex may be loaded into the pores of the support, e.g. using a process analogous to those described in WO94/14856 (Mobil), WO95/12622 (Borealis) and WO2006/097497. The particle size is not critical but is preferably in the range 5 to 200 μm, more preferably 20 to 80 μm. The use of these supports is routine in the art.

In an alternative embodiment, no support is used at all. Such a catalyst system can be prepared in solution, for example in an aromatic solvent like toluene, by contacting the metallocene (as a solid or as a solution) with the cocatalyst, for example methylaluminoxane previously dissolved in an aromatic solvent, or can be prepared by sequentially adding the dissolved catalyst components to the polymerization medium.

In one particularly preferred embodiment, no external carrier is used but the catalyst is still presented in solid particulate form. Thus, no external support material, such as inert organic or inorganic carrier, for example silica as described above is employed.

In order to provide the catalyst of the invention in solid form but without using an external carrier, it is preferred if a liquid/liquid emulsion system is used. The process involves forming dispersing catalyst components (i) and (ii) in a solvent, and solidifying said dispersed droplets to form solid particles.

In particular, the method involves preparing a solution of one or more catalyst components; dispersing said solution in an solvent to form an emulsion in which said one or more catalyst components are present in the droplets of the dispersed phase; immobilising the catalyst components in the dispersed droplets, in the absence of an external particulate porous support, to form solid particles comprising the said catalyst, and optionally recovering said particles. This process enables the manufacture of active catalyst particles with improved morphology, e.g. with a predetermined spherical shape, surface properties and particle size and without using any added external porous support material, such as an inorganic oxide, e.g. silica. By the term "preparing a solution of one or more catalyst components" is meant that the catalyst forming compounds may be combined in one solution which is dispersed to the immiscible solvent, or, alternatively, at least two separate catalyst solutions for each part of the catalyst forming compounds may be prepared, which are then dispersed successively to the solvent. In a preferred method for forming the catalyst at least two separate solutions for each or part of said catalyst may be prepared, which are then dispersed successively to the immiscible solvent.

More preferably, a solution of the complex comprising the transition metal compound and the cocatalyst is combined with the solvent to form an emulsion wherein that inert solvent forms the continuous liquid phase and the solution comprising the catalyst components forms the dispersed phase (discontinuous phase) in the form of dispersed droplets. The droplets are then solidified to form solid catalyst particles, and the solid particles are separated from the liquid and optionally washed and/or dried. The solvent forming the continuous phase may be immiscible to the catalyst solution at least at the conditions (e. g. temperatures) used during the dispersing step.

The term "immiscible with the catalyst solution" means that the solvent (continuous phase) is fully immiscible or partly immiscible i.e. not fully miscible with the dispersed phase solution. Preferably said solvent is inert in relation to the compounds of the catalyst system to be produced. Full disclosure of the necessary process can be found in

WO03/051934.

The inert solvent must be chemically inert at least at the conditions (e.g. temperature) used during the dispersing step. Preferably, the solvent of said continuous phase does not contain dissolved therein any significant amounts of catalyst forming compounds. Thus, the solid particles of the catalyst are formed in the droplets from the compounds which originate from the dispersed phase (i.e. are provided to the emulsion in a solution dispersed into the continuous phase).

The terms "immobilisation" and "solidification" are used herein interchangeably for the same purpose, i.e. for forming free flowing solid catalyst particles in the absence of an external porous particulate carrier, such as silica. The solidification happens thus within the droplets. Said step can be effected in various ways as disclosed in said WO03/051934. Preferably solidification is caused by an external stimulus to the emulsion system such as a temperature change to cause the solidification. Thus in said step the catalyst component (s) remain "fixed" within the formed solid particles. It is also possible that one or more of the catalyst components may take part in the solidification/immobilisation reaction.

Accordingly, solid, compositionally uniform particles having a predetermined particle size range can be obtained.

Furthermore, the particle size of the catalyst particles of the invention can be controlled by the size of the droplets in the solution, and spherical particles with a uniform particle size distribution can be obtained.

The process is also industrially advantageous, since it enables the preparation of the solid particles to be carried out as a one-pot procedure. Continuous or semicontinuous processes are also possible for producing the catalyst.

The polypropylene composition comprises the copolymer of ethylene (B) in an amount of from 5 to 30 wt.-%, preferably from 7 to 25 wt.-%, more preferably from 10 to 20 wt.-%, based on the total weight of the polypropylene composition.

The copolymer of ethylene (B) is a copolymer of ethylene with comonomer units derived from 1-butene and/or 1-hexene. Preferably the copolymer of ethylene (B) is a terpolymer of ethylene with comonomer units derived from 1-butene and 1-hexene.

The term ‘a copolymer of ethylene with comonomer units derived from 1-butene’ indicates that the copolymer of ethylene (B) contains only units derivable from ethylene and 1-butene. The term ‘a copolymer of ethylene with comonomer units derived from 1-hexene’ indicates that the copolymer of ethylene (B) contains only units derivable from ethylene and 1-hexene. The term ‘a terpolymer of ethylene with comonomer units derived from 1-butene and 1-hexene’ indicates that the copolymer of ethylene (B) contains only units derivable from ethylene, 1-butene and 1-hexene.

The copolymer of ethylene (B) has a total comonomer content, i.e. the content of comonomer units derived from 1-butene and/or 1-hexene, of from 1.0 to 25.0 wt.-%, preferably from 1.5 to 22.5 wt.-%, still more preferably from 2.0 to 20.0 wt.-%.

The copolymer of ethylene (B) preferably has a 1-butene content of from 0.1 to 5.0 wt.-%, more preferably from 0.2 to 3.5 wt.-%, still more preferably from 0.3 to 2.0 wt.-%, based on the total weight of the copolymer of ethylene (B).

The copolymer of ethylene (B) preferably has a 1-hexene content of from 5.0 to 25.0 wt.-%, more preferably from 6.0 to 22.5 wt.-%, still more preferably from 7.5 to 20.0 wt.-%, based on the total weight of the copolymer of ethylene (B).

The copolymer of ethylene (B) can be unimodal in regard to the comonomer distribution. This means that the comonomer units derived from 1-butene and/or 1-hexene are uniformly distributed in the copolymer of ethylene (B).

The copolymer of ethylene (B) can be multimodal in regard to the comonomer distribution. This means that the copolymer of ethylene (B) comprises components with different When being a copolymer of ethylene and the comonomer units derived from 1-butene or 1-hexene the copolymer of ethylene (B) in one embodiment can comprise an ethylene homopolymer component and a copolymer of ethylene and 1-butene or 1-hexene component. When being a copolymer of ethylene and the comonomer units derived from 1-butene or 1-hexene the copolymer of ethylene (B) in another embodiment can comprise two copolymer of ethylene and 1-butene or 1-hexene components with different comonomer content.

When being a terpolymer of ethylene and the comonomer units derived from 1-butene and 1-hexene the copolymer of ethylene (B) in one embodiment can comprise an ethylene homopolymer component, a copolymer of ethylene and 1-butene component and a copolymer of ethylene and 1-hexene component.

When being a terpolymer of ethylene and the comonomer units derived from 1-butene and 1-hexene the copolymer of ethylene (B) in another embodiment can comprise an ethylene homopolymer component and a terpolymer of ethylene, 1-butene and 1-hexene component.

When being a terpolymer of ethylene and the comonomer units derived from 1-butene and 1-hexene the copolymer of ethylene (B) in yet another embodiment can comprise a copolymer of ethylene and 1-butene component and a copolymer of ethylene and 1-hexene component.

In a preferred embodiment, the copolymer of ethylene (B) is a terpolymer of ethylene with comonomer units selected from 1-butene and 1-hexene having a 1-butene content of from 0.1 to 5.0 wt.-%, preferably from 0.2 to 3.5 wt.-%, still more preferably from 0.3 to 2.0 wt.-% and a 1-hexene content of from 5.0 to 24.9 wt,-%, more preferably from

6.0 to 22.3 wt.-%, still more preferably from 7.5 to 19.7 wt.-%, based on the total weight of the copolymer of ethylene (B).

The copolymer of ethylene (B) has a density of from 910.0 to 940.0 kg/$m^3$, preferably from 912.0 to 938.0 kg/$m^3$, still more preferably from 015.0 to 935 kg/$m^3$, determined according to ISO 1183.

The copolymer of ethylene (B) preferably is a linear low density polyethylene (LLDPE).

The copolymer of ethylene (B) has a melt flow rate $MFR_2$ of from 0.05 to 3.0 g/10 min, preferably from 0.10 to 2.5 g/10 min, more preferably from 0.50 to 2.0 g/10 min, determined according to ISO 1133 at a load of 2.16 kg and a temperature of 190°C

The copolymer of ethylene (B) preferably has an intrinsic viscosity iV of from 1.5 to 2.5 dl/g, more preferably from 1.7 to 2.2 dl/g, determined according to DIN ISO 1628/1, October 1999 (in Decalin at 135 °C).

Further, the copolymer of ethylene (B) preferably has a ratio of weight average molecular weight to number average molecular weight Mw/Mn of from 2.0 to 5.0, preferably from 2.5 to 4.5, more preferably from 3.0 to 4.0, determined by Gel Permeation Chromatography (GPC) according to ISO 16014-4:2003 and ASTM D 6474-99.

The copolymer of ethylene (B) is preferably obtainable by polymerization in the presence of a single site catalyst system. The single site catalyst system preferably comprises catalytically active metallocene compound or complex combined with a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance With the present invention includes any metallocene compound of a transition metal which bears at least one organic (coordination) ligand and exhibits the catalytic activity alone or together with a cocatalyst. The transition metal compounds are well known in the art and preferably covers compounds of metals from Group 3 to 10, e.g. Group 3 to 7, or 3 to 6, such as Group 4 to 6 of the Periodic

Table, (IUPAC 2007), as well lanthanides or actinides.

In an embodiment the organometallic compound (C) has the following formula (I):

(L)mRnMXq (I)

wherein

"M" is a transition metal (M) transition metal (M) of Group 3 to 10 of the Periodic Table (IUPAC 2007),
each "X" is independently a monoanionic ligand, such as a o -ligand,
each "L" is independently an organic ligand which coordinates to the transition metal "M", "R" is a bridging group linking said organic ligands (L),
"m" is 1, 2 or 3, preferably 2,
"n" is 0, 1 or 2, preferably 1,
"q" is 1, 2 or 3, preferably 2 and
m+q is equal to the valency of the transition metal (M).
"M" is preferably selected from the group consisting of zirconium (Zr), hafnium (Hf), or titanium (Ti), more preferably selected from the group consisting of zirconium (Zr) and hafnium (Hf).
"X" is preferably a halogen, most preferably Cl.

Most preferably the organometallic compound (C) is a metallocene complex which comprises a transition metal compound, as defined above, which contains a cyclopentadienyl, indenyl or fluorenyl ligand as the substituent "L". Further, the ligands "L" may have substituents, such as alkyl groups, aryl groups, arylalkyl groups, alkylaryl groups, silyl groups, siloxy groups, alkoxy groups or other heteroatom groups or the like. Suitable metallocene catalysts are known in the art and are disclosed, among others, in WO-A-95/12622, WO-A-96/32423, WO-A-97/28170, WO-A-98/32776, WO-A-99/61489, WO-A-03/010208, WO-A-03/051934, WO-A-03/051514, WO-A-2004/085499, EP-A-1752462 and EP-A-1739103.

Most preferred the metallocene catalyst, which means the catalytically active metallocene complex, as defined above, is used together With a cocatalyst, which is also known as an activator. Suitable activators are metal alkyl compounds and especially aluminium alkyl compounds known in the art. Especially suitable activators used with metallocene catalysts are alkylaluminium oxy-compounds, such as methylaluminoxane (MAO), tetraisobutylalumoxane (TIBAO) or hexaisobutylalumoxane (HIBAO).

## Process

In another aspect the present invention relates to a process for producing a pipe as described above or below comprising the steps of

a) polymerizing propylene and 1-butene or 1-hexene in a multistage process in the presence of a single site catalyst system to obtain copolymer of propylene with comonomer units derived from 1-butene or 1-hexene (A);
b) blending the copolymer of propylene (A) with the copolymer of ethylene with comonomer units derived from 1-butene and/or 1-hexene (B) to obtain the polypropylene composition; and
c) forming the pipe from the polypropylene composition.

The copolymer of propylene (A) is preferably polymerized in the presence of a single site catalyst system as described above.

The copolymer of propylene (A) is preferably polymerized in a multistage process, which is a sequential polymerization process with at least two polymerization reactors connected in series.

The multistage process preferably comprises the following steps:

(i) introducing a stream of propylene and 1-butene or 1-hexene, preferably 1-hexene, to a first reactor, so that the ratio of the feed rate of 1-butene or 1-hexene, preferably 1-hexene to the feed rate of propylene is from 2.0 to 4.0 mol/kmol; further introducing a stream of catalyst system to the first reactor,
(ii) withdrawing a product stream comprising the first intermediate (PP1) from the first reactor
(iii) transferring the first intermediate (PP1) to a second reactor and further polymerizing in the second reactor the first intermediate by feeding further propylene, 1-butene or 1-hexene, preferably 1-hexene, further in the presence of hydrogen such that the ratio of the concentration of hydrogen to the concentration of propylene is in the range of 0.1 to 0.8 mol/kmol; and further
the concentration of 1-butene or 1-hexene, preferably 1-hexene, to the concentration of propylene is in the range of 3.0 to 6.0 mol/kmol
(iv) yielding the powder of the copolymer of propylene (A).

As regards the process in general the propylene composition is produced in a sequential polymerization process comprising at least two polymerization zones operating at different conditions to produce the propylene composition. The polymerization zones may operate in slurry, solution, or gas phase conditions or their combinations. Suitable processes are disclosed, among others, in WO-A-98/58976, EP-A-887380 and WO-A-98/58977.

The catalyst may be transferred into the polymerization zone by any means known in the art. It is thus possible to suspend the catalyst in a diluent and maintain it as homogeneous slurry. Especially preferred it is to use oil having a viscosity from 20 to 1500 mPa·s as diluent, as disclosed in WO-A-2006/063771. It is also possible to mix the catalyst with a viscous mixture of grease and oil and feed the resultant paste into the polymerization zone. Further still, it is possible to let the catalyst settle and introduce portions of thus obtained catalyst mud into the polymerization zone in a manner disclosed, for instance, in EP-A-428054.

The polymerization in gas phase may be conducted in a fluidized bed reactor, in a fast fluidized bed reactor or in a settled bed reactor or in any combination of these. When a combination of reactors is used then the polymer is transferred from one polymerization reactor to another. Furthermore, a part or whole of the polymer from a polymerization stage may be returned into a prior polymerization stage.

In a preferred embodiment, the prepolymerization is conducted in a continuous manner as bulk slurry polymerization in liquid propylene, i.e. the liquid phase mainly comprises propylene, with minor amount of other reactants and optionally inert components dissolved therein. Preferably the prepolymerization is conducted in a continuous stirred tank reactor or a loop reactor.

The prepolymerization reaction is typically conducted at a temperature of 0 to 40 °C, preferably from 10 to 30 °C, and more preferably from 15 to 25 °C.

The pressure in the prepolymerization reactor is not critical but must be sufficiently high to maintain the reaction mixture in liquid phase. Thus, the pressure may be from 20 to 100 bar, for example 30 to 70 bar.

The reaction conditions are well known in the art as disclosed, among others, in GB 1580635. In the prepolymerization step it is also possible to feed comonomers into the prepolymerization stage.

In average, the amount of prepolymer on the catalyst is preferably from 10 to 1000 g per g of the solid catalyst component, more preferably is from 50 to 500 g per g of the solid catalyst component.

As the person skilled in the art knows, the catalyst particles recovered from a continuous stirred prepolymerization reactor do not all contain the same amount of prepolymer. Instead, each particle has its own characteristic amount which depends on the residence time of that particle in the prepolymerization reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst is preferably within the limits specified above. The amount of prepolymer is known in the art, among others, from GB 1580635.

It is possible to add other components also to the prepolymerization stage. Thus, hydrogen may be added into

the prepolymerization stage to control the molecular weight of the prepolymer as is known in the art. Further, antistatic additive may be used to prevent the particles from adhering to each other or the walls of the reactor as disclosed in WO-A-00/66640.

The polymerization in the first polymerization zone may be conducted in slurry. Then the polymer particles formed in the polymerization, together with the catalyst fragmented and dispersed within the particles, are suspended in the fluid hydrocarbon. The slurry is agitated to enable the transfer of reactants from the fluid into the particles.

Slurry polymerization is preferably a so called bulk polymerization. By "bulk polymerization" is meant a process where the polymerization is conducted in a liquid monomer essentially in the absence of an inert diluent. However, as it is known to a person skilled in the art the monomers used in commercial production are never pure but always contain aliphatic hydrocarbons as impurities. For instance, the propylene monomer may contain up to 5 % of propane as an impurity. As propylene is consumed in the reaction and also recycled from the reaction effluent back to the polymerization, the inert components tend to accumulate, and thus the reaction medium may comprise up to 40 wt-% of other compounds than monomer. It is to be understood, however, that such a polymerization process is still within the meaning of "bulk polymerization", as defined above.

The temperature in the slurry polymerization is typically from 50 to 110 °C, preferably from 60 to 100 °C and in particular from 65 to 95 °C. The pressure is from 1 to 150 bar, preferably from 10 to 100 bar. In some cases it may be preferred to conduct the polymerization at a temperature which is higher than the critical temperature of the fluid mixture constituting the reaction phase and at a pressure which is higher than the critical pressure of said fluid mixture. Such reaction conditions are often referred to as "supercritical conditions". The phrase "supercritical fluid" is used to denote a fluid or fluid mixture at a temperature and pressure exceeding the critical temperature and pressure of said fluid or fluid mixture.

The slurry polymerization may be conducted in any known reactor used for slurry polymerization. Such reactors include a continuous stirred tank reactor and a loop reactor. It is especially preferred to conduct the polymerization in loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

The slurry may be withdrawn from the reactor either continuously or intermittently. A preferred way of intermittent withdrawal is the use of settling legs where the solids concentration of the slurry is allowed to increase before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and EP-A-1860125. The continuous withdrawal may be combined with a suitable concentration method, as disclosed in EP-A-1860125 and EP-A-1591460.

Into the slurry polymerization stage other components may also be introduced as it is known in the art.

Process additives may also be introduced into the reactor to facilitate a stable operation of the process.

When the slurry polymerization stage is followed by a gas phase polymerization stage it is preferred to conduct the slurry directly into the gas phase polymerization zone without a flash step between the stages. This kind of direct feed is described in EP-A-887379, EP-A-887380, EP-A-887381 and EP-A-991684.

The copolymer of propylene (A) obtained from the multistage process can be is extruded and pelletized and then blended with the copolymer of ethylene (B) in pellet form.

The copolymer of propylene (A) obtained from the multistage process can also be blended with the copolymer of ethylene (B) in powder form.

The copolymer of ethylene (B) is preferably polymerized in the presence of a single site catalyst system as described above.

The copolymer of ethylene (B) may be produced in any suitable polymerization process known in the art, which comprise at least one polymerization stage, where polymerization is typically carried out in solution, slurry, bulk or gas phase. Preferably the copolymer of ethylene (B) is produced in a multistage polymerization process comprising at least two polymerization zones.

A first ethylene polymer component is preferably produced in a first polymerization zone and a second ethylene polymer component is preferably produced in a second polymerization zone. The first polymerization zone and the second polymerization zone may be connected in any order, i.e. the first polymerization zone may precede the second polymerization zone, or the second polymerization zone may precede the first polymerization zone or, alternatively, polymerization zones may be connected in parallel. However, it is preferred to operate the polymerization zones in cascaded mode. The polymerization zones may operate in slurry, solution, or gas phase conditions or their combinations.

Suitable processes comprising cascaded slurry and gas phase polymerization stages are disclosed, among others, in WO-A-92/12182 and WO-A-96/18662.

It is often preferred to remove the reactants of the preceding polymerization stage from the polymer before introducing it into the subsequent polymerization stage. This is preferably done when transferring the polymer from one polymerization stage to another.

The catalyst may be transferred into the polymerization zone by any means known in the art. For example, it is possible to suspend the catalyst in a diluent and maintain it as homogeneous slurry, to mix the catalyst with a viscous mixture of grease and oil and feed the resultant paste into the polymerization zone or to let the catalyst settle and introduce portions of thus obtained catalyst mud into the polymerization zone.

The polymerization in the first polymerization zone is preferably conducted in slurry. Then the polymer particles formed in the polymerization, together with the catalyst fragmented and dispersed within the particles, are suspended in the fluid hydrocarbon. The slurry is agitated to enable the transfer of reactants from the fluid into the particles.

The polymerization usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons and preferred diluent is propane.

The ethylene content in the fluid phase of the slurry may be from 2 to about 50 % by mol, preferably from about 2 to about 20 % by mol and in particular from about 3 to about 12 % by mol.

The temperature in the slurry polymerization is typically from 50 to 115°C, preferably from 60 to 110°C and in particular from 70 to 100°C. The pressure is from 1 to 150 bar, preferably from 10 to 100 bar.

The slurry polymerization may be conducted in any known reactor used for slurry polymerization.

Such reactors include a continuous stirred tank reactor and a loop reactor. It is especially preferred to conduct the polymerization in loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

It is sometimes advantageous to conduct the slurry polymerization above the critical temperature and pressure of the fluid mixture. Such operation is described in US-A-5391654. In such operation the temperature is typically from 85 to 110°C, preferably from 90 to 105°C and the pressure is from 30 to 150 bar, preferably from 50 to 100 bar.

The slurry may be withdrawn from the reactor either continuously or intermittently. A preferred way of intermittent withdrawal is the use of settling legs where slurry is allowed to concentrate before withdrawing a batch of the concentrated slurry from the reactor. The continuous withdrawal is advantageously combined With a suitable concentration method, e.g. as disclosed in EP-A-1310295 and EP-A-1591460.

Hydrogen may be fed into the reactor to control the molecular weight of the polymer as known in the art. Furthermore, 1-butene and/or 1-hexene can be added into the reactor e.g. to control the density of the polymer product. The actual amount of such hydrogen and 1-butene and/or 1-hexene feeds depends on the catalyst that is used and the desired melt index (or molecular weight) and density (or comonomer content) of the resulting polymer.

The polymerization in the second polymerization zone is preferably conducted in gas phase, preferably in a fluidized bed reactor, in a fast fluidized bed reactor or in a settled bed reactor or in any combination of these. The polymerization in the second polymerization zone is more preferably conducted in a fluidized bed gas phase reactor, wherein ethylene is polymerized together with 1-butene and/or 1-hexene in the presence of a polymerization catalyst and, preferably in the presence of the reaction mixture from the first polymerization zone in an upwards moving gas stream. The reactor typically contains a fluidized bed comprising the growing polymer particles containing the active catalyst located above a fluidization grid. The polymer bed is fluidized With the help of the fluidization gas comprising the olefin monomer, eventual comonomer(s), eventual chain growth controllers or chain transfer agents, such as hydrogen, and eventual inert gas. The fluidization gas is introduced into an inlet chamber at the bottom of the reactor. One or more of the above-mentioned components may be continuously added into the fluidization gas to compensate for losses caused, amongst others, by reaction or product withdrawal.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas.

When the fluidization gas is contacted with the bed containing the active catalyst the reactive components of the gas, such as monomers and chain transfer agents, react in the presence of the catalyst to produce the polymer product. At the same time the gas is heated by the reaction heat.

The unreacted fluidization gas is removed from the top of the reactor and cooled in a heat exchanger to remove the heat of reaction. The gas is cooled to a temperature which is lower than that of the bed to prevent the bed from heating because of the reaction. It is possible to cool the gas to a temperature where a part of it condenses. When the liquid droplets enter the reaction zone they are vaporised.

The vaporisation heat then contributes to the removal of the reaction heat. This kind of operation is called condensed mode and variations of it are disclosed, among others, in WO-A-2007/025640, USA-4543399, EP-A-699213 and WO-A-94/25495. It is also possible to add condensing agents into the recycle gas stream, as disclosed in EP-A-696293. The condensing agents are non-polymerizable components, such as n-pentane, isopentane, n-butane or isobutane, which are at least partially condensed in the cooler.

The gas is then compressed and recycled into the inlet chamber of the reactor. Prior to the entry into the reactor fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization.

The catalyst may be introduced into the reactor in various ways, either continuously or intermittently. Where the gas phase reactor is a part of a reactor cascade the catalyst is usually dispersed within the polymer particles from the preceding polymerization stage. The polymer particles may be introduced into the gas phase reactor as disclosed in EP-A-1415999 and WO-A-00/26258. Especially if the preceding reactor is a slurry reactor it is advantageous to feed the slurry directly into the fluidized bed of the gas phase reactor as disclosed in EP-A-887379, EP-A-887380, EP-A-887381 and EP-A-991684.

The polymeric product may be withdrawn from the gas phase reactor either continuously or intermittently. Combinations of these methods may also be used. Continuous withdrawal is disclosed, among others, in WO-A-OO/29452. Intermittent withdrawal is disclosed, among others, in US-A-4621952, EP-A-188125, EP-A-250169 and EP-A-579426.

Also antistatic agent(s), such as water, ketones, aldehydes and alcohols, may be introduced into the gas phase reactor if needed. The reactor may also include a mechanical agitator to further facilitate mixing within the fluidized bed.

Typically the fluidized bed polymerization reactor is operated at a temperature within the range of from 50 to 100°C, preferably from 65 to 90°C. The pressure is suitably from 10 to 40 bar, preferably from 15 to 30 bar.

The polymerization of the first ethylene polymer component and second ethylene polymer component in the first and second polymerization zones may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer.

The prepolymerization step may be conducted in slurry or in gas phase. Preferably prepolymerization is conducted in slurry, preferably in a loop reactor. The prepolymerization is then preferably conducted in an inert diluent, preferably the diluent is a low-boiling hydrocarbon having from 1 to 4 carbon atoms or a mixture of such hydrocarbons.

The temperature in the prepolymerization step is typically from 0 to 90°C, preferably from 20 to 80°C and more preferably from 25 to 70°C.

The pressure is not critical and is typically from 1 to 150 bar, preferably from 10 to 100 bar. The catalyst components are preferably all introduced to the prepolymerization step. Preferably the reaction product of the prepolymerization step is then introduced to the first polymerization zone.

The copolymer of ethylene (B) obtained from the multistage process can be is extruded and pelletized and then blended with the copolymer of propylene (A) in pellet form.

The copolymer of ethylene (B) obtained from the multistage process can also be blended with the copolymer of propylene (A) in powder form.

The extrusion may be conducted in the manner generally known in the art, preferably in a twin screw extruder. One example of suitable twin screw extruders is a co-rotating twin screw extruder. Those are manufactured, among others, by Coperion or Japan Steel Works. Another example is a counter-rotating twin screw extruder. Such extruders are manufactured, among others, by Kobe Steel and Japan Steel Works.

The extruders typically include a melting section where the polymer is melted and a mixing section where the polymer melt is homogenised. Melting and homogenisation are achieved by introducing energy into the polymer. The more energy is introduced into the polymer the better homogenisation effect is achieved. However, too high energy incorporation causes the polymer to degrade and the mechanical properties to deteriorate. Suitable level of specific energy input (SEI) is from about 200 to about 450 kWh/ton polymer, preferably from 240 to 350 kWh/ton.

Typical average residence time of the polymer in the extruder is from about 30 seconds to about 10 minutes. This figure depends to some extent on the type of the extruder. However, for most extruder types values from 1 minute to 5 minutes result in a good combination between homogeneity and mechanical properties of the polymer.

Suitable extrusion methods have been disclosed, among others, in EP-A-1600276 and WO-A-98/15591.

Before the extrusion the desired additives are mixed with the polymers.

## Use

In yet another aspect, the present invention relates to the use of a polypropylene composition having a melt flow rate $MFR_2$ of from 0.1 to 1.0 g/10 min, determined according to ISO 1133 at a load of 2.16 kg and a temperature of 230°C, and comprising

(A) from 70 to 95 wt.-%, based on the total weight of the polypropylene composition, of a copolymer of propylene

with comonomer units derived from 1-butene or 1-hexene having

- a total comonomer content of from 0.5 to 5.0 wt.-%;
- a melt flow rate $MFR_2$ of from 0.10 to 2.0 g/10 min, determined according to ISO 1133 at a load of 2.16 kg and a temperature of 230°C; and
- a ratio of weight average molecular weight to number average molecular weight Mw/Mn of from 2.5 to 6.0, determined by Gel Permeation Chromatography (GPC) according to ISO 16014-4:2003 and ASTM D 6474-99; and

(B) from 5 to 30 wt.-%, based on the total weight of the polypropylene composition, of a copolymer of ethylene with comonomer units derived from 1-butene and/or 1-hexene having

- a total comonomer content of from 1.0 to 25.0 wt.-%;
- a density of from 910.0 to 940.0 kg/m$^3$, determined according to ISO 1183; and
- a melt flow rate $MFR_2$ of from 0.05 to 3.0 g/10 min, determined according to ISO 1133 at a load of 2.16 kg and a temperature of 190°C,

for the production of a pipe.

All aspects the polypropylene composition and the pipe as described above or below also apply to the use of the invention.

In the following the present invention is further illustrated by means of examples.

Examples

## 1. Determination methods:

The following definitions of terms and determination methods apply for the above general description of the invention as well as to the below examples unless otherwise defined.

### Quantification of copolymer microstructure by NMR spectroscopy

#### Comonomer determination:

#### 1-hexene content in propylene 1-hexene copolymers

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.(Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the NOE at short recycle delays of 3s (Klimke, K., Parkinson, M., Piel, C., Kaminsky, W., Spiess, H.W., Wilhelm, M., Macromol. Chem. Phys. 2006;207:382., Pollard, M., Klimke, K., Graf, R., Spiess, H.W., Wilhelm, M., Sperber, O., Piel, C., Kaminsky, W., Macromolecules 2004;37:813.). and the RS-HEPT decoupling scheme (Filip, X., Tripon, C., Filip, C., J. Mag. Resn. 2005, 176, 239., Griffin, J.M., Tripon, C., Samoson, A., Filip, C., and Brown, S.P., Mag. Res. in Chem. 2007 45, S1, S198). A total of 16384 (16k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm.

Characteristic signals corresponding to the incorporation of 1-hexene were observed and the comonomer content quantified in the following way.

The amount of 1-hexene incorporated in PHP isolated sequences was quantified using the integral of the αB4 sites at 44.2 ppm accounting for the number of reporting sites per comonomer:

$$H = I_{\alpha B4} / 2$$

The amount of 1-hexene incorporated in PHHP double consecutive sequences was quantified using the integral of the ααB4 site at 41.7 ppm accounting for the number of reporting sites per comonomer:

$$HH = 2 * I_{\alpha\alpha B4}$$

When double consecutive incorporation was observed the amount of 1-hexene incorporated in PHP isolated sequences needed to be compensated due to the overlap of the signals αB4 and αB4B4 at 44.4 ppm:

$$H = (I_{\alpha B4} - 2 * I_{\alpha\alpha B4}) / 2$$

The total 1-hexene content was calculated based on the sum of isolated and consecutively incorporated 1-hexene:

$$H_{total} = H + HH$$

When no sites indicative of consecutive incorporation observed the total 1-hexene comonomer content was calculated solely on this quantity:

$$H_{total} = H$$

Characteristic signals indicative of regio 2,1-erythro defects were observed (Resconi, L., Cavallo, L., Fait, A., Piemontesi, F., Chem. Rev. 2000, 100, 1253).

The presence of 2,1-erythro regio defects was indicated by the presence of the Pαβ (21e8) and Pαγ (21e6) methyl sites at 17.7 and 17.2 ppm and confirmed by other characteristic signals.

The total amount of secondary (2,1-erythro) inserted propene was quantified based on the αα21e9 methylene site at 42.4 ppm:

$$P_{21} = I_{\alpha\alpha 21e9}$$

The total amount of primary (1,2) inserted propene was quantified based on the main Sαα methylene sites at 46.7 ppm and compensating for the relative amount of 2,1-erythro, αB4 and ααB4B4 methylene unit of propene not accounted for (note H and HH count number of hexene monomers per sequence not the number of sequences):

$$P_{12} = I_{S\alpha\alpha} + 2*P_{21} + H + HH / 2$$

The total amount of propene was quantified as the sum of primary (1,2) and secondary (2,1-erythro) inserted propene:

$$P_{total} = P_{12} + P_{21} = I_{S\alpha\alpha} + 3* I_{\alpha\alpha 21e9} + (I_{\alpha B4} - 2 * I_{\alpha\alpha B4}) / 2 + I_{\alpha\alpha B4}$$

This simplifies to:

$$P_{total} = I_{S\alpha\alpha} + 3* I_{\alpha\alpha 21e9} + 0.5*I_{\alpha B4}$$

The total mole fraction of 1-hexene in the polymer was then calculated as:

$$f_H = H_{total} / ( H_{total} + P_{total})$$

The full integral equation for the mole fraction of 1-hexene in the polymer was:

$$f_H = (((I_{\alpha B4} - 2 * I_{\alpha\alpha B4}) / 2) + (2 * I_{\alpha\alpha B4}))/((I_{S\alpha\alpha} + 3*I_{\alpha\alpha 21e9} + 0.5*I_{\alpha B4}) + ((I_{\alpha B4} - 2 * I_{\alpha\alpha B4}) /2) + (2 * I_{\alpha\alpha B4}))$$

This simplifies to:

$$f_H = (I_{\alpha B4}/2 + I_{\alpha\alpha B4}) / (I_{S\alpha\alpha} + 3* I_{\alpha\alpha 21e9} + I_{\alpha B4} + I_{\alpha\alpha B4})$$

The total comonomer incorporation of 1-hexene in mole percent was calculated from the mole fraction in the usual manner:

$$H [mol\text{-}\%] = 100 * f_H$$

The total comonomer incorporation of 1-hexene in weight percent was calculated from the mole fraction in the standard manner:

$$H [wt.\text{-}\%] = 100 * ( f_H * 84.16) / ( (f_H * 84.16) + ((1 - f_H) * 42.08) )$$

**Comonomer content of 1-butene and 1-hexene of a linear low density polyethylene (LLDPE)**

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the transient NOE at short recycle delays of 3 s (Pollard, M., Klimke, K., Graf, R., Spiess, H.W., Wilhelm, M., Sperber, O., Piel, C., Kaminsky, W., Macromolecules 2004;37:813., Klimke, K., Parkinson, M., Piel, C., Kaminsky, W., Spiess, H.W., Wilhelm, M., Macromol. Chem. Phys. 2006;207:382.) and the RS-HEPT decoupling scheme (Filip, X., Tripon, C., Filip, C., J. Mag. Resn. 2005, 176, 239, Griffin, J.M., Tripon, C., Samoson, A., Filip, C., and Brown, S.P., Mag. Res. in Chem. 2007 45, S1, S198). A total of 1024 (1k) transients were acquired per spectrum. This setup was chosen due its high sensitivity towards low comonomer contents.

Quantitative $^{13}C\{^1H\}$ NMR spectra were processed, integrated and quantitative properties determined using custom spectral analysis automation programs. All chemical shifts are internally referenced to the bulk methylene signal ($\delta$+) at 30.00 ppm (J. Randall, Macromol. Sci., Rev. Macromol. Chem. Phys. 1989, C29, 201).

The amount of ethylene was quantified using the integral of the methylene ($\delta$+) sites at 30.00 ppm accounting for the number of reporting sites per monomer:

$$E = I_{\delta+} / 2$$

the presence of isolated comonomer units is corrected for based on the number of isolated comonomer units present:

$$E_{total} = E + (3*B + 2*H) / 2$$

where B and H are defined for their respective comonomers. Correction for consecutive and non-consecutive commoner incorporation, when present, is undertaken in a similar way. Characteristic signals corresponding to the incorporation of 1-butene were observed (J. Randall, Macromol. Sci., Rev. Macromol. Chem. Phys. 1989, C29, 201.) and all contents calculated with respect to all other monomers present in the polymer.

The amount isolated 1-butene incorporated in EEBEE sequences was quantified using the integral of the $_*$B2 sites at 38.3 ppm accounting for the number of reporting sites per comonomer:

$$B = I_{*B2}$$

The amount consecutively incorporated 1-butene in EEBBEE sequences was quantified using the integral of the ααB2B2 site at 39.4 ppm accounting for the number of reporting sites per comonomer:

$$BB = 2 * I_{\alpha\alpha B2B2}$$

The amount non consecutively incorporated 1-butene in EEBEBEE sequences was quantified using the integral of the ββB2B2 site at 24.7 ppm accounting for the number of reporting sites per comonomer:

$$BEB = 2 * I_{\beta\beta B2B2}$$

Due to the overlap of the *B2 and *βB2B2 sites of isolated (EEBEE) and non-consecutively incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$B_{total} = B + BB + BEB$$

The total mole fraction of 1-butene in the polymer was then calculated as:

$$f_B = ( B_{total}) / ( E_{total} + B_{total} + H_{total} )$$

Characteristic signals corresponding to the incorporation of 1-hexene were observed (J. Randall, Macromol. Sci., Rev. Macromol. Chem. Phys. 1989, C29, 201.) and all contents calculated with respect to all other monomers present in the polymer.

The amount isolated 1-hexene incorporated in EEHEE sequences was quantified using the integral of the *B4 sites at 39.9 ppm accounting for the number of reporting sites per comonomer:

$$H = I_{*B4}$$

The amount consecutively incorporated 1-hexene in EEHHEE sequences was quantified using the integral of the ααB4B4 site at 40.5 ppm accounting for the number of reporting sites per comonomer:

$$HH = 2 * I_{\alpha\alpha B4B4}$$

The amount non consecutively incorporated 1-hexene in EEHEHEE sequences was quantified using the integral of the ββB4B4 site at 24.7 ppm accounting for the number of reporting sites per comonomer:

$$HEH = 2 * I_{\beta\beta B4B4}$$

Due to overlap of the ββB2B2 sites of non-consecutively incorporated (EEBEBEE) 1-butene and ββB4B4 sites of non-consecutively incorporated (EEHEHEE) 1-hexene the total amount of non-consecutive incorporation (EEBEBEE) 1-butene was assumed to be proportional to the amount of isolated 1-butene (B) insertion and the total amount of non-consecutive incorporation (EEHEHEE) 1-hexene was assumed to be proportional to the amount of isolated 1-hexene (H).

The total mole fraction of 1-hexene in the polymer was then calculated as:

$$f_H = (H_{total}) / (E_{total} + B_{total} + H_{total})$$

The mole percent comonomer incorporation is calculated from the mole fraction:

$$B\ [mol\text{-}\%] = 100 * f_B$$

$$H\ [mol\text{-}\%] = 100 * f_H$$

The weight percent comonomer incorporation is calculated from the mole fraction:

$$B\ [wt.\text{-}\%] = 100 * (f_B * 56.11) / ((f_B * 56.11) + (f_H * 84.16) + ((1-(f_B + f_H)) * 28.05))$$

$$H\ [wt.\text{-}\%] = 100 * (f_H * 84.16\ ) / ((f_B * 56.11) + (f_H * 84.16) + ((1-(f_B + f_H)) * 28.05))$$

**Melt Flow Rate** (MFR)

The melt flow rate (MFR) or melt index (MI) is measured according to ISO 1133. Where different loads can be used, the load is normally indicated as the subscript, for instance, $MFR_2$ which indicates 2.16 kg load. The temperature is selected according to ISO 1133 for the specific polymer, for instance, 230 °C for polypropylene and 190 °C for polyethylene. Thus, for polypropylene $MFR_2$ is measured at 230 °C temperature and under 2.16 kg load and for polyethylene $MFR_2$ is measured at 190 °C temperature and under 2.16 kg load.

**Density**

Density is measured according to ISO 1183-187. Sample preparation is done by compression moulding in accordance with ISO 1872-2:2007.

**Analytical** Temperature Rising Elution Fractionation (TREF) obtained from the Crossfractionation Chromatography (CFC)

The chemical composition distribution as well as the determination of the molecular weight distribution and the corresponded molecular weight averages (Mn, Mw and Mv) at a certain elution temperature (polymer crystallinity in solution) were determined by a full automated Cross Fractionation Chromatography (CFC) as described by Ortin A., Monrabal B., Sancho-Tello J., Macromol. Symp., 2007, 257, 13-28.

A CFC instrument (PolymerChar, Valencia, Spain) was used to perform the crossfractionation chromatography (TREF x SEC). A four band IR5 infrared detector (PolymerChar, Valencia, Spain) was used to monitor the concentration. Around 40 mg of the polymer sample was dissolved in 25 ml TCB in the stainless steel vessel for 150 min at 150 °C. Once the sample was completely dissolved an aliquot of 0,5 ml was loaded into the TREF column and stabilized for a while at 110 °C. The polymer was crystallized and precipitate to a temperature of 30°C by applying a constant cooling rate of 0.1 °C/min. A discontinuous elution process is performed using the following temperature steps: (30, 40, 50, 60, 70, 75, 80, 84, 88, 92, 95, 98, 100, 102, 104,106, 108, 110, 115, 120, 130 and 140).

In the second dimension, the GPC analysis, 3 PL Olexis columns and 1x Olexis Guard columns from Agilent (Church Stretton, UK) were used as stationary phase. As eluent 1,2,4-trichlorobenzene (TCB, stabilized with 250 mg/L 2,6-Di tert butyl-4-methyl-phenol) at 150 °C and a constant flow rate of 1 mL/min were applied. The column set was calibrated using universal calibration (according to ISO 16014-2:2003) with at least 15 narrow MWD polystyrene (PS) standards in the range of 0,5 kg/mol to 11 500 kg/mol. Following Mark Houwink constants were used to convert PS molecular weights into the PP molecular weight equivalents.

$$\mathbf{K_{PS} = 19 \times 10^{-3}\ mL/g, \qquad \alpha_{PS} = 0.655}$$

$$K_{PP} = 19 \times 10^{-3}\ mL/g, \qquad \alpha_{PP} = 0.725$$

A third order polynomial fit was used to fit the calibration data. Data processing was performed using the software provided from PolymerChar with the CFC instrument.

Determination of polymer fraction eluting at a temperature between 31 and 80°C, and a logM between 4.5 and 6.0

The polymer fraction eluting between 31 and 80°C and a molecular weight between logM 4.5 and 6 is calculated in the following way from the CFC data:

$$\boldsymbol{Fraction\ (31-80°C)_{logM4,5-6}} = \frac{\sum_{j=40}^{80}\sum_{i=4,5}^{6} H_{iJ}}{\sum_{j=30}^{130}\sum_{i=2,5}^{6} H_{iJ}}$$

The polymer fraction eluted at 30°C in the discontinuous elution process (see above) is treated as purge fraction and is not included into the above calculation, which starts at a temperature of 31°C.

GPC: Molecular weight averages, molecular weight distribution, and polydispersity index ($M_n$, $M_w$, $M_w/M_n$)

Molecular weight averages (Mw, Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99.

A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/L 2,6-Di tert butyl-4-methyl-phenol) as solvent at 160 °C and at a constant flow rate of 1 mL/min. 200 μL of sample solution were injected per analysis. The column set was calibrated using universal calibration (according to ISO 16014-2:2003) with at least 15 narrow MWD polystyrene (PS) standards in the range of 0,5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking in the autosampler of the GPC instrument

DSC analysis, melting temperature (Tm) and crystallization temperature (Tc): measured with a TA Instrument Q2000 differential scanning calorimetry (DSC) on 5 to 7 mg samples. DSC is run according to ISO 11357 / part 3 / method C2 in a heat / cool /heat cycle with a scan rate of 10°C/min in the temperature range of -30 to +225°C.

Crystallization temperature (Tc) and heat of crystallization (Hc) are determined from the cooling step, while melting temperature (Tm) and heat of melting (Hm) are determined from the second heating step.

**Xylene Solubles (XCS)**

The xylene soluble (XCS) fraction as defined and described in the present invention is determined in line with ISO 16152 as follows: 2.0 g of the polymer were dissolved in 250 ml p-xylene at 135 °C under agitation. After 30 minutes, the solution was allowed to cool for 15 minutes at ambient temperature and then allowed to settle for 30 minutes at 25 +/- 0.5 °C. The solution was filtered with filter paper into two 100 ml flasks. The solution from the first 100 ml vessel was evaporated in nitrogen flow and the residue dried under vacuum at 90 °C until constant weight is reached. The xylene soluble fraction (percent) can then be determined as follows:

$$XS\ [\%] = (100 \cdot m \cdot V_0)/(m_0 \cdot V);$$

$m_0$ = initial polymer amount [g]; m = weight of residue [g]; $V_0$ = initial volume [ml]; V = volume of analysed sample [ml].

**Al and Zr determination (ICP-method)**

The elementary analysis of a catalyst was performed by taking a solid sample of mass, M, cooling over dry ice. Samples were diluted up to a known volume, V, by dissolving in nitric acid ($HNO_3$, 65 %, 5 % of V) and freshly deionised (DI) water (5 % of V). The solution was then added to hydrofluoric acid (HF, 40 %, 3 % of V), diluted with DI water up to the final volume, V, and left to stabilise for two hours.

The analysis was run at room temperature using a Thermo Elemental iCAP 6300 Inductively Coupled Plasma

- Optical Emmision Spectrometer (ICP-OES) which was calibrated using a blank (a solution of 5 % $HNO_3$, 3 % HF in DI water), and 6 standards of 0.5 ppm, 1 ppm, 10 ppm, 50 ppm, 100 ppm and 300 ppm of Al, with 0.5 ppm, 1 ppm, 5 ppm, 20 ppm, 50 ppm and 100 ppm of Hf and Zr in solutions of 5 % HNO3, 3 % HF in DI water.

Immediately before analysis the calibration is 'resloped' using the blank and 100 ppm Al, 50 ppm Hf, Zr standard, a quality control sample (20 ppm Al, 5 ppm Hf, Zr in a solution of 5 % HNO3, 3 % HF in DI water) is run to confirm the reslope. The QC sample is also run after every 5th sample and at the end of a scheduled analysis set.

The content of hafnium was monitored using the 282.022 nm and 339.980 nm lines and the content for zirconium using 339.198 nm line. The content of aluminium was monitored via the 167.079 nm line, when Al concentration in ICP sample was between 0-10 ppm (calibrated only to 100 ppm) and via the 396.152 nm line for Al concentrations above 10 ppm.

The reported values are an average of three successive aliquots taken from the same sample and are related back to the original catalyst by inputting the original mass of sample and the dilution volume into the software.

In the case of analysing the elemental composition of prepolymerized catalysts, the polymeric portion is digested by ashing in such a way that the elements can be freely dissolved by the acids. The total content is calculated to correspond to the weight% for the prepolymerized catalyst.

**Catalyst Activity**

The catalyst activity was calculated on the basis of following formula:

$$\textit{Catalyst Activity (kg-PP/g-Cat/h)} = \frac{\textit{amount of polymer produced (kg)}}{\textit{catalyst loading (g)} \times \textit{polymerisation time (h)}}$$

**Productivity**

Overall productivity was calculated as

$$\textit{Catalyst Productivity (kg-PP/g)} = \frac{\textit{amount of polymer produced (kg)}}{\textit{catalyst loading (g)}}$$

For both the catalyst activity and the productivity the catalyst loading is either the grams of prepolymerized catalyst or the grams of metallocene present in that amount of prepolymerized catalyst.

**Prepolymerization degree** (DP): weight of polymer /weight of solid catalyst before prepolymerization step

The composition of the catalysts (before the off-line prepolymerization step) has been determined by ICP as described above. The metallocene content of the prepolymerized catalysts has been calculated from the ICP data as follows:

Equation 1

$$\frac{\mathrm{Al}}{\mathrm{Zr}}(\mathrm{mol/mol}) = \frac{\mathrm{Al(wt\%, ICP)}/26{,}98}{\mathrm{Zr(wt\%, ICP)}/91{,}22}$$

Equation 2

$$\mathrm{Zr(mol\%)} = \frac{100}{\frac{\mathrm{Al}}{\mathrm{Zr}}(\mathrm{mol/mol}) + 1}$$

Equation 3

$$\mathrm{MC(wt\%, unprepol.\,cat)} = \frac{100 \times (\mathrm{Zr, mol\%} \times \mathrm{MwMC})}{\mathrm{Zr, mol\%} \times \mathrm{MwMC} + (100 - \mathrm{Zr, mol\%}) \times \mathrm{MwMAO}}$$

Equation 4

$$MC(wt\%, \text{prepolymerized cat}) = \frac{MC(wt\%, \text{unprepolymerized cat})}{DP + 1}$$

**Particle size**

Particle size distribution was measured in accordance with ISO 13320-1 with a Coulter LS 200 particle size analyzer. The instrument is able to measure the particle size distribution in a range of 0.4 - 2000 μm. The method is a laser diffraction method, where a laser beam is directed at the sample travelling in a flow-through cuvette. n-Heptane was used as the sample fluid.

The polymer sample was first pre-treated by screening out particles larger than 2 mm. The screened sample was mixed with isopropanol and put in an ultra-sound device in order to separate the particles from each other. The pre-treated sample was then placed in the sample unit and analysed. The result was calculated using a computer program provided with the instrument.

The PSD index (also called SPAN) is defined by the following equation (3) below:

$$PSD\ Index = \frac{d_{90} - d_{10}}{d_{50}} \qquad (3)$$

wherein $d_{50}$ ($D_{v50}$) represents the median volumetric particle diameter, $d_{90}$ ($D_{v90}$) represents the smallest particle diameter so that 90 % of the particles have a smaller diameter than $d_{90}$; $d_{10}$ ($D_{v10}$) represents the smallest particle diameter so that 10 % of the particles have a smaller diameter than $d_{10}$.

The following particle size and particle size distribution indicators have been used in the experiments:

$D_{v90}$ = the volumetric amount of particle diameter at 90% cumulative size,
$D_{v10}$ = the volumetric amount of particle diameter at 10% cumulative size,
$D_{v50}$ = the volumetric amount of particle diameter at 50% cumulative size (median volumetric particle size),

$$SPAN = (D_{v90} - D_{v10})/D_{v50}.$$

**Flexural** modulus

The flexural modulus is determined according to ISO 178. The test specimens have a dimension of 80 x 10 x 4.0 $mm^3$ (length x width x thickness) and are prepared by injection molding according to EN ISO 1873-2. The length of the span between the supports is 64 mm, the test speed 2 mm/min.

**Notched impact strength (NIS)**

The Charpy notched impact strength (NIS) was measured according to ISO 179 1eA at +23 °C, using injection moulded bar test specimens of 80 x 10 x 4 $mm^3$ prepared in accordance with EN ISO 1873-2.

**Pipe pressure test**

The pressure test performance of pipes produced from the inventive composition and the comparative composition was tested in accordance with ISO 1167-1 and-2. The pipes having a diameter of 32 mm and a wall thickness of 3 mm were produced in accordance with ISO 1167-2 on a conventional pipe extrusion line, then subjected to a circumferential (hoop) stress of 4.6 MPa and 4.9 MPa at a temperature of 95°C in a water-in-water setup in accordance with ISO 1167-1. The time in hours to failure was registered, times with an addition "still running" meaning that the failure time had not yet been reached at the time of filing of the present patent application.

**Pipe impact test**

The Charpy impact strength of the pipe were done according to ISO 9854-2. The specimen were cut from pipe

(production details listed below), with the size of specimen was 50 x 6 x 3mm$^3$. The test was done at 0°C, each time 10 specimen is tested. The type of failure (break/no break) and number of specimen with each type of failure was reported.

**2. Polymers used in examples**

a) Copolymer of propylene

The polymerization of the copolymer of propylene was carried out in pilot scale. A loop - gas phase reactor set up was used.

The polymerization catalyst used for polymerizing the copolymer of propylene was prepared as described in detail in WO 2015/011135 A1 (metallocene complex MC1 with methylaluminoxane (MAO) and borate resulting in Catalyst 3 described in WO 2015/011135 A1) with the proviso that the surfactant is 2,3,3,3-tetrafluoro-2-(1,1,2,2,3,3,3-heptafluoropropoxy)-1-propanol. The metallocene complex (MC1 in WO 2015/011135 A1) was prepared as described in WO 2013/007650 A1 (metallocene E2 in WO 2013/007650 A1).

Hexene was used as comonomer in all cases and the hexene was fed to the both reactors, loop and gas phase reactor in order to control the desired hexene content for the final product.

The polymerization conditions are shown in Table 1.

Table 1: Polymerization conditions of the propylene copolymer

| Example | Propylene copolymer |
|---|---|
| Product type | PP-r (hexene) |
| Catalyst type | SSC |
| Catalyst | WO2015/011135, Catalyst 3 |
| Co-catalyst sys | Borate/MAO |
| Donor type | No Donor |
| Prepolymerisation reactor | |
| Catalyst feed (g/h) | 3.72 |
| B1 Temp. (°C) | 20 |
| B1 Press. (kPa) | 4791 |
| B1 Residence time (h) | 0.2 |
| B1 Hydrogen feed (g/h) | 0.102 |
| Loop reactor | |
| Temperature (°C) | 75 |
| Pressure (kPa) | 4552 |
| Propylene feed (kg/h) | 164.9 |
| Hexene feed (kg/h) | 1.10 |
| H2/C3 ratio (mol/kmol) | 0.020 |
| C6/C3 ratio (mol/kmol) | 3.3 |
| Residence time (h) | 0.5 |
| Production rate (kg/h) | 34.9 |
| Polymer Split (wt.-%) | 45 |
| Catalyst productivity (kg/g) | 9.9 |
| Tm (°C) | 146.4 |
| $MFR_2$ (g/10 min) | 0.39 |
| C6 content (wt.-%) | 1.3 |

(continued)

| | |
|---|---|
| Loop reactor | |
| XS (wt.-%) | 1.1 |
| Average particle size | 1.2 |
| Bulk density (kg/m$^3$) | 463 |
| GPR reactor | |
| Temperature (°C) | 80 |
| Pressure (kPa) | 2400 |
| Propylene feed (kg/h) | 210 |
| Hydrogen feed (g/h) | 0.7 |
| H2/C3 ratio (mol/kmol) | 0.53 |
| C6/C3 concentration ratio (mol/kmol) | 4.3 |
| Residence time (h) | 2.1 |
| Production rate (kg/h) | 43 |
| Polymer Split (wt.-%) | 55 |
| Total volatiles (PP2) | 75 |
| Total catalyst productivity (kg/g) | 20.8 |
| Bulk density (kg/m$^3$) | 508 |
| Average particle size (mm) (PP2) | 1.38 |
| Fines (wt.-%) (PP2) | 0.01 |
| Final | |
| $MFR_2$ (g/10 min) | 0.31 |
| Total 1-hexene content (wt.-%) | 2.3 |
| XCS (wt.-%) | 0.8 |
| Mw/Mn | 4.3 |

b) Ethylene copolymer

The ethylene copolymer used in the inventive example IE1 is the linear low density polyethylene of example IE1 of EP 3 257 895 A1 having a 1-butene content of 0.3 mol-% (0.6 wt.-%), a 1-hexene content of 2.6 mol-% (8.1 wt.-%), density of 918 kg/m$^3$ and a melt flow rate $MFR_2$ (190 °C, 2.16 kg) of 1.5 g/10min.

### 3. Polypropylene compositions and pipes

For preparing the polypropylene composition of the comparative example CE the propylene copolymer as listed above is compounded together with additives (1000 ppm of Irganox B215 supplied by BASF, being a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4), and 500 ppm of calcium stearate from Baerlocher) in a co-rotating twin-screw extruder at 220°C.

For preparing the polypropylene composition of the inventive example IE the propylene copolymer and 15 wt% of the ethylene copolymer both as listed above are compounded together with additives (1000 ppm of Irganox B215 supplied by BASF, being a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4), and 500 ppm of calcium stearate from Baerlocher) in a co-rotating twin-screw extruder at 220°C..

Pipes having a diameter of 32 mm and a wall thickness of 3 mm were produced on a Battenfeld Pro pipe extrusion line. The typical conditions are following:

Melt temperature: 224°C
Output: 30kg/h
Screw speed: 38 rpm
Cooling water temperature: 20°C
Vacuum spray tank: 0.23bar
Water flow in calibrator inlet: 4l/h.

The properties of the polypropylene compositions and pipes of CE and IE are listed in Table 2.

Table 2: Properties of the compositions and pipes of CE and IE

| | | | CE | IE |
|---|---|---|---|---|
| **Composition** | | | | |
| copolymer of propylene | | wt.-% | | |
| copolymer of ethylene | | wt.-% | 0 | 15.0 |
| additives | | wt.-% | | |
| $MFR_2$ | | g/10min | 0.28 | 0.3 |
| XCS | | wt.-% | 1.44 | 1.86 |
| Tc | | °C | 102 | 104 |
| Tm1 | | °C | 140 | 139 |
| Tm2 | | °C | | 121 |
| Hm1 | | J/g | 75 | 38 |
| Hm2 | | J/g | | 42 |
| Tp(1) (CFC) | | °C | - | 61 |
| Tp(2) (CFC) | | °C | 97 | 96.7 |
| Polymer Fraction 31-80°C and logM 4.5-6 | | wt.-% | 1.3 | 10.2 |
| Flexural modulus | | MPa | 1013 | 894 |
| Charpy NIS, 23°C | | $kJ/m^2$ | 7.19 | 10.06 |
| Charpy NIS, 0°C | | $kJ/m^2$ | 2.38 | 3.46 |
| Charpy NIS, -20°C | | $kJ/m^2$ | 2.03 | 2.03 |
| **Pipe** | | | | |
| Quality of Pipe | | | Good | Good |
| Pipe impact /0°C | | | 10 break | 10 NB |
| Pressure resistance 95°C, 4.6MPa | time to failure | h | >11579* | >9281 |
| Pressure resistance 20°C, 16MPa | time to failure | h | 7800 | 20 |
| NB = no break<br>* test stopped without any failure. | | | | |

Figure 1 shows the TREF fractogram and the corresponded viscosity average molecular weight of IE1 and CE1 obtained from CFC analysis.

Figure 2 shows the CFC contour plot of IE1. The claimed polymer fraction with an elution temperature between 31 and 80°C and logM between 4.5 and 6 is highlighted as square.

Figure 3 shows the CFC contour plot of CE1. The claimed polymer fraction with an elution temperature between 31 and 80°C and logM between 4.5 and 6 is highlighted as square.

The pipe according to the invention in example IE shows a good balance of properties in regard of good surface quality, acceptable pressure resistance and improved impact resistance. In contrast to that the pipe of comparative example CE shows breaks in the pipe impact test at 0°C.

## Claims

1. A pipe comprising a polypropylene composition, wherein the polypropylene composition comprises

   (A) from 70 to 95 wt.-%, based on the total weight of the polypropylene composition, of a copolymer of propylene with comonomer units derived from 1-butene or 1-hexene having

   - a total comonomer content of from 0.5 to 5.0 wt.-%;
   - a melt flow rate $MFR_2$ of from 0.10 to 2.0 g/10 min, determined according to ISO 1133 at a load of 2.16 kg and a temperature of 230°C; and
   - a ratio of weight average molecular weight to number average molecular weight Mw/Mn of from 2.5 to 6.0, determined by Gel Permeation Chromatography (GPC) according to ISO 16014-4:2003 and ASTM D 6474-99; and

   (B) from 5 to 30 wt.-%, based on the total weight of the polypropylene composition, of a copolymer of ethylene with comonomer units derived from 1-butene and/or 1-hexene having

   - a total comonomer content of from 1.0 to 25.0 wt.-%;
   - a density of from 910.0 to 940.0 kg/m$^3$, determined according to ISO 1183; and
   - a melt flow rate $MFR_2$ of from 0.05 to 3.0 g/10 min, determined according to ISO 1133 at a load of 2.16 kg and a temperature of 190°C;

   wherein the polypropylene composition has a melt flow rate $MFR_2$ of from 0.1 to 1.0 g/10 min, determined according to ISO 1133 at a load of 2.16 kg and a temperature of 230°C.

2. The pipe according to claim 1, wherein the polypropylene composition has a polymer fraction eluting at a temperature between 31 and 80°C excluding a purge fraction, and a logM between 4.5 and 6.0 in an amount of 4 to 25 wt.-%, determined by Crossfractionation Chromatography (CFC) and/or a profile comprising two peaks in the analytical Temperature Rising Elution Fractionation (TREF) elugram obtained from the Crossfractionation Chromatography (CFC) analysis, wherein a first peak Tp(1) elutes between 45 and 90°C and a second peak Tp(2) elutes between 85 and 100°C.

3. The pipe according to claims 1 or 2, wherein the polypropylene composition has a flexural modulus of from 700 to 1000 MPa, determined according to ISO 178 on injection moulded test specimens prepared according to EN ISO 1872-2.

4. The pipe according to any one of the preceding claims, wherein the polypropylene composition has a Charpy notched impact strength at 23°C of from 7.5 to 15.0 kJ/m$^2$ and/or a Charpy notched impact strength at 0°C of from 2.5 to 5.0 kJ/m$^2$ and/or a Charpy notched impact strength at -20°C of from 1.5 to 4.0 kJ/m$^2$, determined according to ISO 179 1eA on injection moulded test specimens prepared according to EN ISO 1872-2.

5. The pipe according to any one of the preceding claims, wherein the polypropylene composition has one or more, preferably all of the following properties:

   - a xylene cold solubles (XCS) content of from 1.0 to 3.5 wt.-%, determined according to ISO 16152;
   - a melting temperature Tm of 135 to 145°C, determined according to ISO 11357 / part 3;
   - a crystallization temperature Tc of 100 to 110°C, determined according to ISO 11357 / part 3; and/or
   - a melting enthalpy Hm of from 30 to 45 J/g, determined according to ISO 11357 / part 3.

6. The pipe according to any one of the preceding claims, wherein the copolymer of propylene (A) has one or more, preferably all of the following properties:

   - a xylene cold solubles (XCS) content of from 0.2 to 2.5 wt.-%, determined according to ISO 16152;
   - a melting temperature Tm of 135 to 145°C, determined according to ISO 11357 / part 3;
   - a crystallization temperature Tc of 100 to 105°C, determined according to ISO 11357 / part 3; and/or
   - a melting enthalpy Hm of from 70 to 80 J/g, determined according to ISO 11357 / part 3.

7. The pipe according to any one of the preceding claims, wherein the copolymer of propylene (A) is obtainable by

polymerization in the presence of a single site catalyst system, whereby the catalyst system includes

(i) a catalyst having the following structure

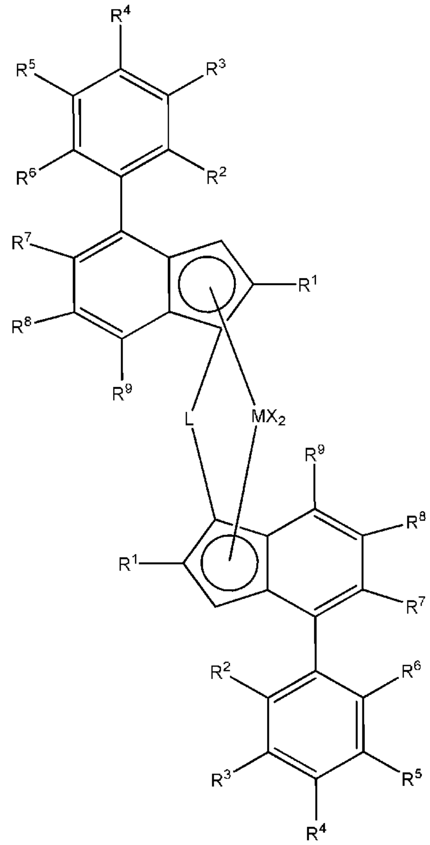

wherein

M is zirconium or hafnium;
each X independently is a sigma -donor ligand
L is a bridge of formula $-(ER^{10}_2)_y-$;
y is 1 or 2;
E is C or Si;
each $R^{10}$ is independently a $C_1$-$C_{20}$-hydrocarbyl group, tri($C_1$-$C_{20}$ alkyl)silyl group, $C_6$-$C_{20}$ aryl group, $C_7$-$C_{20}$ arylalkyl group or $C_7$-$C_{20}$ alkylaryl group or L is an alkylene group such as methylene or ethylene;
$R^1$ are each independently the same or are different from each other and are a $CH_2$-$R^{11}$ group, with $R^{11}$ being H or linear or branched $C_1$-$C_6$ alkyl group, $C_3$-$C_8$ cycloalkyl group, $C_6$-$C_{10}$ aryl group;
$R^3$, $R^4$ and $R^5$ are each independently the same or different from each other and are H or a linear or branched $C_1$-$C_6$ alkyl group, $C_7$-$C_{20}$ arylalkyl group, $C_7$-$C_{20}$ alkylaryl group, or $C_6$-$C_{20}$ aryl group with the proviso that if there are four or more $R^3$, $R^4$ and $R^5$ groups different from H present in total, one or more of $R^3$, $R^4$ and $R^5$ is other than tert butyl;
$R^7$ and $R^8$ are each independently the same or different from each other and are H, a $CH_2$-$R^{12}$ group, with $R^{12}$ being H or linear or branched $C_1$-$C_6$ alkyl group, $SiR^{13}_3$, $GeR^{13}_3$, $OR^{13}$, $SR^{13}$, $NR^{13}_2$,
wherein $R^{13}$ is a linear or branched $C_1$-$C_6$ alkyl group, $C_7$-$C_{20}$ alkylaryl group and $C_7$-$C_{20}$ arylalkyl group or $C_6$-$C_{20}$ aryl group,
$R^9$ are each independently the same or different from each other and are H or a linear or branched $C_1$-$C_6$ alkyl group; and
$R^2$ and $R^6$ all are H; and

(ii) a cocatalyst system comprising an aluminoxane cocatalyst.

**8.** The pipe according to any one of the preceding claims, wherein the copolymer of ethylene (B) is a terpolymer of

ethylene with comonomer units selected from 1-butene and 1-hexene having a 1-butene content of from 0.1 to 5.0 wt.-% and a 1-hexene content of from 5.0 to 24.9 wt.-%.

**9.** The pipe according to any one of the preceding claims, wherein the copolymer of ethylene (B) has an intrinsic viscosity iV of from 1.5 to 2.5 dl/g, determined according to DIN ISO 1628/1, October 1999 (in Decalin at 135 °C).

**10.** The pipe according to any one of the preceding claims, wherein the copolymer of ethylene (B) is obtainable by polymerization in the presence of a single site catalyst system.

**11.** The pipe according to any one of the preceding being a pressure pipe, preferably a pressure pipe for hot and cold water.

**12.** A process for producing a pipe according to any one of the preceding claims comprising the steps of

a) polymerizing propylene and 1-butene or 1-hexene in a multistage process in the presence of a single site catalyst system to obtain the copolymer of propylene with comonomer units derived from 1-butene or 1-hexene (A);
b) blending the copolymer of propylene (A) with the copolymer of ethylene with comonomer units derived from 1-butene and/or 1-hexene (B) to obtain the polypropylene composition; and
c) forming the pipe from the polypropylene composition.

**13.** The process according to claim 12, wherein the multistage process is a sequential polymerization process with at least two polymerization reactors connected in series.

**14.** The process according to claims 12 or 13, wherein the catalyst system includes

(i) a catalyst having the following structure

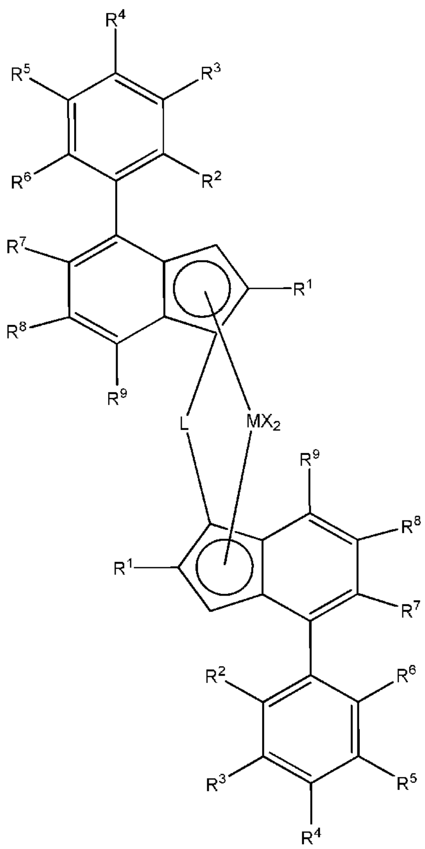

wherein

M is zirconium or hafnium;
each X independently is a sigma -donor ligand
L is a bridge of formula $-(ER^{10}{}_2)_y-$;
y is 1 or 2;
E is C or Si;
each $R^{10}$ is independently a $C_1$-$C_{20}$-hydrocarbyl group, tri($C_1$-$C_{20}$ alkyl)silyl group, $C_6$-$C_{20}$ aryl group, $C_7$-$C_{20}$ arylalkyl group or $C_7$-$C_{20}$ alkylaryl group or L is an alkylene group such as methylene or ethylene;
$R^1$ are each independently the same or are different from each other and are a $CH_2$-$R^{11}$ group, with $R^{11}$ being H or linear or branched $C_1$-$C_6$ alkyl group, $C_3$-$C_8$ cycloalkyl group, $C_6$-$C_{10}$ aryl group;
$R^3$, $R^4$ and $R^5$ are each independently the same or different from each other and are H or a linear or branched $C_1$-$C_6$ alkyl group, $C_7$-$C_{20}$ arylalkyl group, $C_7$-$C_{20}$ alkylaryl group, or $C_6$-$C_{20}$ aryl group with the proviso that if there are four or more $R^3$, $R^4$ and $R^5$ groups different from H present in total, one or more of $R^3$, $R^4$ and $R^5$ is other than tert butyl;
$R^7$ and $R^8$ are each independently the same or different from each other and are H, a $CH_2$-$R^{12}$ group, with $R^{12}$ being H or linear or branched $C_1$-$C_6$ alkyl group, $SiR^{13}{}_3$, $GeR^{13}{}_3$, $OR^{13}$, $SR^{13}$, $NR^{13}{}_2$,
wherein $R^{13}$ is a linear or branched $C_1$-$C_6$ alkyl group, $C_7$-$C_{20}$ alkylaryl group and $C_7$-$C_{20}$ arylalkyl group or $C_6$-$C_{20}$ aryl group,
$R^9$ are each independently the same or different from each other and are H or a linear or branched $C_1$-$C_6$ alkyl group; and
$R^2$ and $R^6$ all are H; and

(ii) a cocatalyst system comprising an aluminoxane cocatalyst.

**15.** The use of a polypropylene composition having a melt flow rate $MFR_2$ of from 0.1 to 1.0 g/10 min, determined according to ISO 1133 at a load of 2.16 kg and a temperature of 230°C, and comprising

(A) from 70 to 95 wt.-%, based on the total weight of the polypropylene composition, of a copolymer of propylene with comonomer units derived from 1-butene or 1-hexene having

• a total comonomer content of from 0.5 to 5.0 wt.-%;
• a melt flow rate $MFR_2$ of from 0.10 to 2.0 g/10 min, determined according to ISO 1133 at a load of 2.16 kg and a temperature of 230°C; and
• a ratio of weight average molecular weight to number average molecular weight Mw/Mn of from 2.5 to 6.0, determined by Gel Permeation Chromatography (GPC) according to ISO 16014-4:2003 and ASTM D 6474-99; and

(B) from 5 to 30 wt.-%, based on the total weight of the polypropylene composition, of a copolymer of ethylene with comonomer units derived from 1-butene and/or 1-hexene having

• a total comonomer content of from 1.0 to 25.0 wt.-%;
• a density of from 910.0 to 940.0 $kg/m^3$, determined according to ISO 1183; and
• a melt flow rate $MFR_2$ of from 0.05 to 3.0 g/10 min, determined according to ISO 1133 at a load of 2.16 kg and a temperature of 190°C,

for the production of a pipe.

**Patentansprüche**

**1.** Rohr, umfassend eine Polypropylenzusammensetzung, wobei die Polypropylenzusammensetzung umfasst

(A) 70 bis 95 Gew.-%, bezogen auf das Gesamtgewicht der Polypropylenzusammensetzung, eines Copolymers aus Propylen mit von 1-Buten oder 1-Hexen abgeleiteten Comonomereinheiten mit

• einem Gesamtgehalt an Comonomeren von 0,5 bis 5,0 Gew.-%;
• einer Schmelzflussrate $MFR_2$ von 0,10 bis 2,0 g/10 min, bestimmt nach ISO 1133 bei einer Last von 2,16 kg und einer Temperatur von 230°C; und
• einem Verhältnis des gewichtsmittleren Molekulargewichts zum zahlenmittleren Molekulargewicht Mw/Mn

von 2,5 bis 6,0, bestimmt durch Gelpermeationschromatographie (GPC) gemäß ISO 16014-4:2003 und ASTM D 6474-99; und

(B) 5 bis 30 Gew.-%, bezogen auf das Gesamtgewicht der Polypropylenzusammensetzung, eines Copolymers aus Ethylen mit von 1-Buten und/oder 1-Hexen abgeleiteten Comonomereinheiten mit

- einem Gesamtgehalt an Comonomeren von 1,0 bis 25,0 Gew.-%;
- einer Dichte von 910,0 bis 940,0 kg/$m^3$, bestimmt nach ISO 1183; und
- einer Schmelzflussrate $MFR_2$ von 0,05 bis 3,0 g/10 min, bestimmt nach ISO 1133 bei einer Last von 2,16 kg und einer Temperatur von 190°C;

wobei die Polypropylenzusammensetzung eine Schmelzflussrate $MFR_2$ von 0,1 bis 1,0 g/10 min aufweist, bestimmt nach ISO 1133 bei einer Last von 2,16 kg und einer Temperatur von 230°C.

**2.** Rohr nach Anspruch 1, wobei die Polypropylenzusammensetzung eine Polymerfraktion aufweist, die bei einer Temperatur zwischen 31 und 80°C unter Ausschluss einer Spülfraktion eluiert, und ein logM zwischen 4,5 und 6,0 in einer Menge von 4 bis 25 Gew.-%, bestimmt durch Kreuzfraktionierungschromatographie (CFC), und/oder ein Profil, das zwei Peaks im Elugramm der analytischen Temperature Rising Elution Fractionation (TREF), erhalten aus der Kreuzfraktionierungschromatographie (CFC)-Analyse, umfasst, wobei ein erster Peak Tp(1) zwischen 45 und 90°C eluiert und ein zweiter Peak Tp(2) zwischen 85 und 100°C eluiert.

**3.** Rohr nach Anspruch 1 oder 2, wobei die Polypropylenzusammensetzung ein Biegemodul von 700 bis 1000 MPa aufweist, bestimmt nach ISO 178 an spritzgegossenen Prüfkörpern, die nach EN ISO 1872-2 hergestellt wurden.

**4.** Rohr nach einem der vorhergehenden Ansprüche, wobei die Polypropylenzusammensetzung eine Charpy-Kerbschlagzähigkeit bei 23°C von 7,5 bis 15,0 kJ/$m^2$ und/oder eine Charpy-Kerbschlagzähigkeit bei 0°C von 2,5 bis 5,0 kJ/$m^2$ und/oder eine Charpy-Kerbschlagzähigkeit bei -20°C von 1,5 bis 4,0 kJ/$m^2$ aufweist, bestimmt nach ISO 179 1eA an spritzgegossenen Prüfkörpern, die nach EN ISO 1872-2 hergestellt wurden.

**5.** Rohr nach einem der vorhergehenden Ansprüche, wobei die Polypropylenzusammensetzung eine oder mehrere, vorzugsweise alle der folgenden Eigenschaften aufweist:

- einen Gehalt an in kaltem Xylol löslichen Anteilen (XCS) von 1,0 bis 3,5 Gew.-%, bestimmt nach ISO 16152;
- eine Schmelztemperatur Tm von 135 bis 145°C, bestimmt nach ISO 11357 / Teil 3;
- eine Kristallisationstemperatur Tc von 100 bis 110°C, bestimmt nach ISO 11357 / Teil 3; und/oder
- eine Schmelzenthalpie Hm von 30 bis 45 J/g, bestimmt nach ISO 11357 / Teil 3.

**6.** Rohr nach einem der vorhergehenden Ansprüche, wobei das Propylencopolymer (A) eine oder mehrere, vorzugsweise alle der folgenden Eigenschaften aufweist:

- einen Gehalt an in kaltem Xylol löslichen Anteilen (XCS) von 0,2 bis 2,5 Gew.-%, bestimmt nach ISO 16152;
- eine Schmelztemperatur Tm von 135 bis 145°C, bestimmt nach ISO 11357 / Teil 3;
- eine Kristallisationstemperatur Tc von 100 bis 105°C, bestimmt nach ISO 11357 / Teil 3; und/oder
- eine Schmelzenthalpie Hm von 70 bis 80 J/g, bestimmt nach ISO 11357 / Teil 3.

**7.** Rohr nach einem der vorhergehenden Ansprüche, wobei das Propylencopolymer (A) durch Polymerisation in Gegenwart eines single-site-Katalysatorsystems erhältlich ist, wobei das Katalysatorsystem Folgendes umfasst

(i) einen Katalysator mit der folgenden Struktur

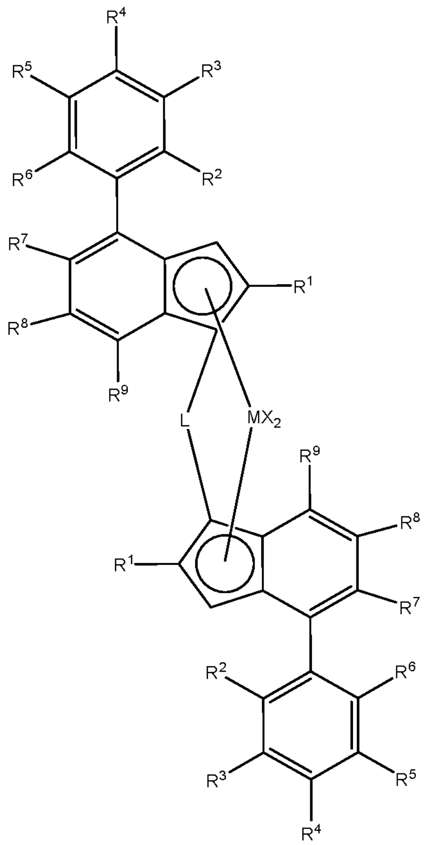

wobei

M Zirkonium oder Hafnium ist;
jedes X unabhängig voneinander ein Sigma-Donor-Ligand ist
L eine Brücke der Formel $-(ER^{10}{}_2)_y-$ ist;
y 1 oder 2 ist;
E C oder Si ist;
jedes $R^{10}$ unabhängig voneinander eine $C_1$-$C_{20}$-Kohlenwasserstoffgruppe, Tri($C_1$-$C_{20}$ alkyl)silylgruppe, $C_6$-$C_{20}$ Arylgruppe, $C_7$-$C_{20}$ Arylalkylgruppe oder $C_7$-$C_{20}$ Alkylarylgruppe ist oder L eine Alkylengruppe wie Methylen oder Ethylen ist;
$R^1$ jeweils unabhängig voneinander gleich sind oder sich voneinander unterscheiden und eine $CH_2$-$R^{11}$ Gruppe sind, wobei $R^{11}$ H oder eine lineare oder verzweigte $C_1$-$C_6$ Alkylgruppe, $C_3$-$C_8$ Cycloalkylgruppe, $C_6$-$C_{10}$ Arylgruppe ist;
$R^3$, $R^4$ und $R^5$ jeweils unabhängig voneinander gleich sind oder sich voneinander unterscheiden und H oder eine lineare oder verzweigte $C_1$-$C_6$ Alkylgruppe, $C_7$-$C_{20}$ Arylalkylgruppe, $C_7$-$C_{20}$ Alkylarylgruppe oder eine $C_6$-$C_{20}$ Arylgruppe sind, mit der Maßgabe, dass, wenn insgesamt vier oder mehr von H verschiedene Gruppen $R^3$, $R^4$ und $R^5$ vorhanden sind, eine oder mehrere der Gruppen $R^3$, $R^4$ und $R^5$ von tert-Butyl verschieden sind;
$R^7$ und $R^8$ jeweils unabhängig voneinander gleich sind oder sich voneinander unterscheiden und H, eine $CH_2$-$R^{12}$ Gruppe, wobei $R^{12}$ H oder eine lineare oder verzweigte $C_1$-$C_6$ Alkylgruppe ist, $SiR^{13}{}_3$, $GeR^{13}{}_3$, $OR^{13}$, $SR^{13}$, $NR^{13}{}_2$ sind,
worin $R^{13}$ eine lineare oder verzweigte $C_1$-$C_6$ Alkylgruppe, $C_7$-$C_{20}$ Alkylarylgruppe und $C_7$-$C_{20}$ Arylalkylgruppe oder $C_6$ -$C_{20}$ Arylgruppe ist,
$R^9$ jeweils unabhängig voneinander gleich sind oder sich voneinander unterscheiden und H oder eine lineare oder verzweigte $C_1$-$C_6$ Alkylgruppe sind; und
$R^2$ und $R^6$ alle H sind; und

(ii) ein Cokatalysatorsystem, das einen Aluminoxan-Cokatalysator umfasst.

**8.** Rohr nach einem der vorhergehenden Ansprüche, wobei das Ethylencopolymer (B) ein Terpolymer von Ethylen mit

Comonomereinheiten ist, die aus 1-Buten und 1-Hexen ausgewählt sind, mit einem 1-Butengehalt von 0,1 bis 5,0 Gew.-% und einem 1-Hexengehalt von 5,0 bis 24,9 Gew.-%.

**9.** Rohr nach einem der vorhergehenden Ansprüche, wobei das Ethylencopolymer (B) eine intrinsische Viskosität iV von 1,5 bis 2,5 dl/g, bestimmt nach DIN ISO 1628/1, Oktober 1999 (in Decalin bei 135 °C), aufweist.

**10.** Rohr nach einem der vorhergehenden Ansprüche, wobei das Ethylencopolymer (B) durch Polymerisation in Gegenwart eines single-site-Katalysatorsystems erhältlich ist.

**11.** Rohr nach einem der vorhergehenden Ansprüche, wobei das Rohr ein Druckrohr, vorzugsweise ein Druckrohr für Warm- und Kaltwasser ist.

**12.** Verfahren zur Herstellung eines Rohres nach einem der vorhergehenden Ansprüche, das die folgenden Schritte umfasst

a) Polymerisation von Propylen und 1-Buten oder 1-Hexen in einem mehrstufigen Verfahren in Gegenwart eines single-site-Katalysatorsystems, um das Copolymer von Propylen mit von 1-Buten oder 1-Hexen abgeleiteten Comonomereinheiten (A) zu erhalten;
b) Mischen des Propylencopolymers (A) mit dem Copolymer von Ethylen mit von 1-Buten und/oder 1-Hexen abgeleiteten Comonomereinheiten (B), um die Polypropylenzusammensetzung zu erhalten; und
c) Formung des Rohrs aus der Polypropylenzusammensetzung.

**13.** Verfahren nach Anspruch 12, wobei das mehrstufige Verfahren ein sequentielles Polymerisationsverfahren mit mindestens zwei in Reihe geschalteten Polymerisationsreaktoren ist.

**14.** Verfahren nach Anspruch 12 oder 13, wobei das Katalysatorsystem Folgendes umfasst

(i) einen Katalysator mit der folgenden Struktur

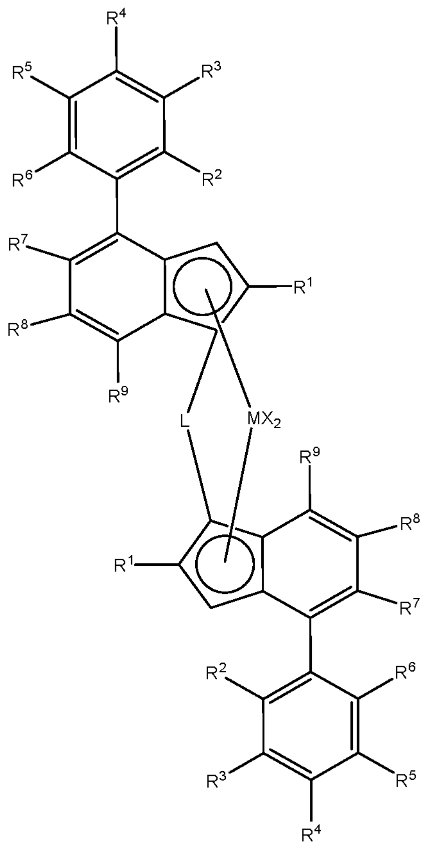

wobei

M Zirkonium oder Hafnium ist;
jedes X unabhängig voneinander ein Sigma-Donor-Ligand ist L eine Brücke der Formel $-(ER^{10}_2)_y-$ ist;
y 1 oder 2 ist;
E C oder Si ist;
jedes $R^{10}$ unabhängig voneinander eine $C_1$-$C_{20}$-Kohlenwasserstoffgruppe, Tri($C_1$-$C_{20}$ alkyl)silylgruppe, $C_6$-$C_{20}$ Arylgruppe, $C_7$-$C_{20}$ Arylalkylgruppe oder $C_7$-$C_{20}$ Alkylarylgruppe ist oder L eine Alkylengruppe wie Methylen oder Ethylen ist;
$R^1$ jeweils unabhängig voneinander gleich sind oder sich voneinander unterscheiden und eine $CH_2$-$R^{11}$ Gruppe sind, wobei $R^{11}$ H oder eine lineare oder verzweigte $C_1$-$C_6$ Alkylgruppe, $C_3$-$C_8$ Cycloalkylgruppe, $C_6$-$C_{10}$ Arylgruppe ist;
$R^3$, $R^4$ und $R^5$ jeweils unabhängig voneinander gleich sind oder sich voneinander unterscheiden und H oder eine lineare oder verzweigte $C_1$-$C_6$ Alkylgruppe, $C_7$-$C_{20}$ Arylalkylgruppe, $C_7$-$C_{20}$ Alkylarylgruppe oder eine $C_6$-$C_{20}$ Arylgruppe sind, mit der Maßgabe, dass, wenn insgesamt vier oder mehr von H verschiedene Gruppen $R^3$, $R^4$ und $R^5$ vorhanden sind, eine oder mehrere der Gruppen $R^3$, $R^4$ und $R^5$ von tert-Butyl verschieden sind;
$R^7$ und $R^8$ jeweils unabhängig voneinander gleich sind oder sich voneinander unterscheiden und H, eine $CH_2$-$R^{12}$ Gruppe, wobei $R^{12}$ H oder eine lineare oder verzweigte $C_1$-$C_6$ Alkylgruppe ist, $SiR^{13}_3$, $GeR^{13}_3$, $OR^{13}$, $SR^{13}$, $NR^{13}_2$ sind,
worin $R^{13}$ eine lineare oder verzweigte $C_1$-$C_6$ Alkylgruppe, $C_7$-$C_{20}$ Alkylarylgruppe und $C_7$-$C_{20}$ Arylalkylgruppe oder $C_6$ -$C_{20}$ Arylgruppe ist,
$R^9$ jeweils unabhängig voneinander gleich sind oder sich voneinander unterscheiden und H oder eine lineare oder verzweigte $C_1$-$C_6$ Alkylgruppe sind; und
$R^2$ und $R^6$ alle H sind; und

(ii) ein Cokatalysatorsystem, das einen Aluminoxan-Cokatalysator umfasst.

**15.** Verwendung einer Polypropylenzusammensetzung mit einer Schmelzflussrate $MFR_2$ von 0,1 bis 1,0 g/10 min, bestimmt nach ISO 1133 bei einer Last von 2,16 kg und einer Temperatur von 230°C, und umfassend

(A) 70 bis 95 Gew.-%, bezogen auf das Gesamtgewicht der Polypropylenzusammensetzung, eines Copolymers aus Propylen mit von 1-Buten oder 1-Hexen abgeleiteten Comonomereinheiten mit

- einem Gesamtgehalt an Comonomeren von 0,5 bis 5,0 Gew.-%,
- einer Schmelzflussrate $MFR_2$ von 0,10 bis 2,0 g/10 min, bestimmt nach ISO 1133 bei einer Last von 2,16 kg und einer Temperatur von 230°C; und
- einem Verhältnis des gewichtsmittleren Molekulargewichts zum zahlenmittleren Molekulargewicht Mw/Mn von 2,5 bis 6,0, bestimmt durch Gelpermeationschromatographie (GPC) gemäß ISO 16014-4:2003 und ASTM D 6474-99; und

(B) 5 bis 30 Gew.-%, bezogen auf das Gesamtgewicht der Polypropylenzusammensetzung, eines Copolymers aus Ethylen mit von 1-Buten und/oder 1-Hexen abgeleiteten Comonomereinheiten mit

- einem Gesamtgehalt an Comonomeren von 1,0 bis 25,0 Gew.-%;
- einer Dichte von 910,0 bis 940,0 $kg/m^3$, bestimmt nach ISO 1183; und
- einer Schmelzflussrate $MFR_2$ von 0,05 bis 3,0 g/10 min, bestimmt nach ISO 1133 bei einer Last von 2,16 kg und einer Temperatur von 190°C;

für die Herstellung eines Rohrs.

## Revendications

**1.** Tuyau comprenant une composition de polypropylène, dans lequel la composition de polypropylène comprend

(A) de 70 à 95 % en poids, sur la base du poids total de la composition de polypropylène, d'un copolymère de propylène avec des motifs comonomères dérivés du 1-butène ou du 1-hexène présentant

- une teneur totale en comonomère de 0,5 à 5,0 % en poids ;

• un indice de fluidité à chaud $MFR_2$ de 0,10 à 2,0 g/10 min, déterminé selon l'ISO 1133 sous une charge de 2,16 kg et à une température de 230 °C; et
• un rapport poids moléculaire moyen en poids sur poids moléculaire moyen en nombre Mw/Mn de 2,5 à 6,0, déterminé par chromatographie par perméation sur gel (GPC) selon l'ISO 16014-4:2003 et l'ASTM D 6474-99 ; et

(B) de 5 à 30 % en poids, sur la base du poids total de la composition de polypropylène, d'un copolymère d'éthylène avec des motifs comonomères dérivés du 1-butène et/ou du 1-hexène présentant

• une teneur totale en comonomère de 1,0 à 25,0 % en poids ;
• une masse volumique de 910,0 à 940,0 kg/$m^3$, déterminée selon l'ISO 1183 ; et
• un indice de fluidité à chaud $MFR_2$ de 0,05 à 3,0 g/10 min, déterminé selon l'ISO 1133 sous une charge de 2,16 kg et à une température de 190 °C ;

dans lequel la composition de polypropylène présente un indice de fluidité à chaud $MFR_2$ de 0,1 à 1,0 g/10 min, déterminé selon l'ISO 1133 sous une charge de 2,16 kg et à une température de 230 °C.

**2.** Tuyau selon la revendication 1, dans lequel la composition de polypropylène présente une fraction polymère éluée à une température entre 31 et 80 °C à l'exclusion d'une fraction de purge, et un logM entre 4,5 et 6,0 en une quantité de 4 à 25 % en poids, déterminée par chromatographie par fractionnement croisé (CFC) et/ou un profil comprenant deux pics sur l'élugramme analytique de fractionnement par élution à température croissante (TREF) obtenu à partir de l'analyse par chromatographie par fractionnement croisé (CFC), dans lequel un premier pic Tp(1) est élué entre 45 et 90 °C et un deuxième pic Tp(2) est élué entre 85 et 100 °C.

**3.** Tuyau selon les revendications 1 ou 2, dans lequel la composition de polypropylène présente un module de flexion de 700 à 1000 MPa, déterminé selon l'ISO 178 sur des éprouvettes moulées par injection préparées selon l'EN ISO 1872-2.

**4.** Tuyau selon l'une des revendications précédentes, dans lequel la composition de polypropylène présente une résistance aux chocs Charpy avec entaille à 23 °C de 7,5 à 15,0 kJ/$m^2$ et/ou une résistance aux chocs Charpy avec entaille à 0 °C de 2,5 à 5,0 kJ/$m^2$ et/ou une résistance aux chocs Charpy avec entaille à -20°C de 1,5 à 4,0 kJ/$m^2$, déterminée selon l'ISO 179 1eA sur des éprouvettes moulées par injection préparées selon l'EN ISO 1872-2.

**5.** Tuyau selon l'une des revendications précédentes, dans lequel la composition de polypropylène présente une ou plusieurs, de préférence toutes les propriétés suivantes :

• une teneur en substances solubles dans le xylène à froid (XCS) de 1,0 à 3,5 % en poids, déterminée selon l'ISO 16152 ;
• une température de fusion Tm de 135 à 145 °C, déterminée selon l'ISO 11357/partie 3 ;
• une température de cristallisation Tc de 100 à 110 °C, déterminée selon l'ISO 11357/partie 3 ; et/ou
• une enthalpie de fusion Hm de 30 à 45 J/g, déterminée selon l'ISO 11357/partie 3.

**6.** Tuyau selon l'une des revendications précédentes, dans lequel le copolymère de propylène (A) présente une ou plusieurs, de préférence toutes les propriétés suivantes :

• une teneur en substances solubles dans le xylène à froid (XCS) de 0,2 à 2,5 % en poids, déterminée selon l'ISO 16152 ;
• une température de fusion Tm de 135 à 145 °C, déterminée selon l'ISO 11357/partie 3 ;
• une température de cristallisation Tc de 100 à 105 °C, déterminée selon l'ISO 11357/partie 3 ; et/ou
• une enthalpie de fusion Hm de 70 à 80 J/g, déterminée selon l'ISO 11357/partie 3.

**7.** Tuyau selon l'une des revendications précédentes, dans lequel le copolymère de propylène (A) peut être obtenu par polymérisation en présence d'un système catalytique à site unique, le système catalytique comporte

(i) un catalyseur présentant la structure suivante

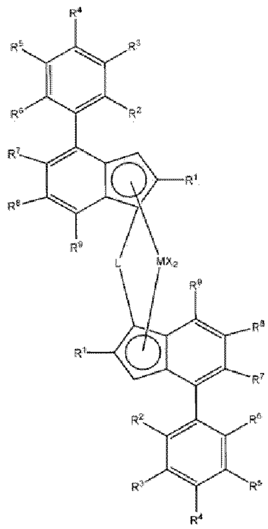

dans laquelle

M est un zirconium ou un hafnium ;
chaque X est indépendamment un ligand donneur sigma
L est un pont de formule - $(ER^{10}{}_2)_y$-;
y est 1 ou 2 ;
E est C ou Si ;
chaque $R^{10}$ est indépendamment un groupe hydrocarbyle en $C_1$-$C_{20}$, un groupe tri (alkyle en $C_1$-$C_{20}$) silyle, un groupe aryle en $C_6$-$C_{20}$, un groupe arylalkyle en $C_7$-$C_{20}$ ou L est un groupe alkylène tel qu'un méthylène ou un éthylène ;
les $R^1$ sont chacun indépendamment identiques ou sont différents les uns des autres et sont un groupe $CH_2$-$R^{11}$, $R^{11}$ étant H ou un groupe alkyle linéaire ou ramifié en $C_1$-$C_6$, un groupe cycloalkyle en $C_3$-$C_8$, un groupe aryle en $C_6$-$C_{10}$ ;
R3, $R^4$ et $R^5$ sont chacun indépendamment identiques ou différents les uns des autres et sont H ou un groupe alkyle linéaire ou ramifié en $C_1$-$C_6$, un groupe arylalkyle en $C_7$-$C_{20}$, un groupe alkylaryle en $C_7$-$C_{20}$, ou un groupe aryle en $C_6$-$C_{20}$ à condition que s'il y a quatre groupes $R^3$, $R^4$ et $R^5$ ou plus différents de H présents au total, un ou plusieurs parmi $R^3$, $R^4$ et $R^5$ soient autres qu'un tert-butyle ;
$R^7$ et $R^8$ sont chacun indépendamment identiques ou différents l'un de l'autre et sont H, un groupe $CH_2$-$R^{12}$, $R^{12}$ étant H ou un groupe alkyle linéaire ou ramifié en $C_1$-$C_6$, $SiR^{13}{}_3$, $GeR^{13}{}_3$, $OR^{13}$, $SR^{13}$, $NR^{13}{}_2$, dans lequel $R^{13}$ est un groupe alkyle linéaire ou ramifié en $C_1$-$C_6$, un groupe alkylaryle en $C_7$-$C_{20}$ et un groupe arylalkyle en $C_7$-$C_{20}$ ou un groupe aryle en $C_6$-$C_{20}$,
les $R^9$ sont chacun indépendamment identiques ou différents les uns des autres et sont H ou un groupe alkyle linéaire ou ramifié en $C_1$-$C_6$ ; et
$R^2$ et $R^6$ sont tous H ; et

(ii) un système de cocatalyseur comprenant un cocatalyseur à aluminoxane.

**8.** Tuyau selon l'une des revendications précédentes, dans lequel le copolymère d'éthylène (B) est un terpolymère d'éthylène avec des motifs comonomères sélectionnés parmi le 1-butène et le 1-hexène présentant une teneur en 1-butène de 0,1 à 5,0 % en poids et une teneur en 1-hexène de 5,0 à 24,9 % en poids.

**9.** Tuyau selon l'une des revendications précédentes, dans lequel le copolymère d'éthylène (B) présente une viscosité intrinsèque iV de 1,5 à 2,5 dl/g, déterminée selon le DIN ISO 1628/1, octobre 1999 (dans la décaline à 135 °C).

**10.** Tuyau selon l'une des revendications précédentes, dans lequel le copolymère d'éthylène (B) peut être obtenu par polymérisation en présence d'un système catalytique à site unique.

**11.** Tuyau selon l'une des revendications précédentes, qui est un tuyau sous pression, de préférence un tuyau sous pression pour eau chaude et froide.

**12.** Procédé de production d'un tuyau selon l'une des revendications précédentes comprenant les étapes consistant à

a) polymériser du propylène et du 1-butène ou du 1-hexène dans un procédé à plusieurs étapes en présence d'un système catalytique à site unique pour obtenir le copolymère de propylène ayant des motifs comonomères dérivés du 1-butène ou du 1-hexène (A) ;
b) mélanger le copolymère de propylène (A) avec le copolymère d'éthylène ayant des motifs comonomères dérivés du 1-butène et/ou du 1-hexène (B) pour obtenir la composition de polypropylène ; et
c) former le tuyau à partir de la composition de polypropylène.

**13.** Procédé selon la revendication 12, dans lequel le procédé à plusieurs étapes est un procédé de polymérisation séquentielle avec au moins deux réacteurs de polymérisation raccordés en série.

**14.** Procédé selon les revendications 12 ou 13, dans lequel le système catalytique comporte

(i) un catalyseur présentant la structure suivante

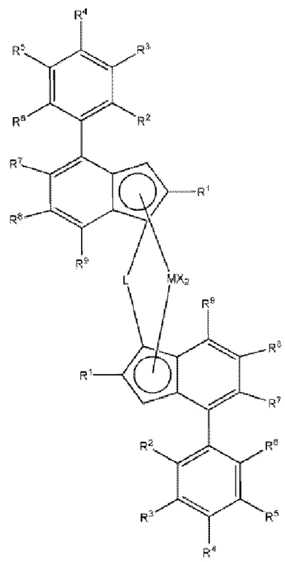

dans laquelle

M est un zirconium ou un hafnium ;
chaque X est indépendamment un ligand donneur sigma
L est un pont de formule - $(ER^{10}{}_2)_y$-;
y est 1 ou 2 ;
E est C ou Si ;
chaque $R^{10}$ est indépendamment un groupe hydrocarbyle en $C_1$-$C_{20}$, un groupe tri (alkyle en $C_1$-$C_{20}$) silyle, un groupe aryle en $C_6$-$C_{20}$, un groupe arylalkyle en $C_7$-$C_{20}$ ou un groupe alkylaryle en $C_7$-$C_{20}$ ou L est un groupe alkylène tel qu'un méthylène ou un éthylène ;
les $R^1$ sont chacun indépendamment identiques ou sont différents les uns des autres et sont un groupe $CH_2$-$R^{11}$, $R^{11}$ étant H ou un groupe alkyle linéaire ou ramifié en $C_1$-$C_6$, un groupe cycloalkyle en $C_3$-$C_8$, un groupe aryle en $C_6$-$C_{10}$ ;
$R^3$, $R^4$ et $R^5$ sont chacun indépendamment identiques ou différents les uns des autres et sont H ou un groupe alkyle linéaire ou ramifié en $C_1$-$C_6$, un groupe arylalkyle en $C_7$-$C_{20}$, un groupe alkylaryle en $C_7$-$C_{20}$, ou un groupe aryle en $C_6$-$C_{20}$ à condition que s'il y a quatre groupes $R^3$, $R^4$ et $R^5$ ou plus différents de H présents au total, un ou plusieurs parmi $R^3$, $R^4$ et $R^5$ soient autres qu'un tert-butyle ;
$R^7$ et $R^8$ sont chacun indépendamment identiques ou différents l'un de l'autre et sont H, un groupe $CH_2$-$R^{12}$, $R^{12}$ étant H ou un groupe alkyle linéaire ou ramifié en $C_1$-$C_6$, $SiR^{13}{}_3$, $GeR^{13}{}_3$, $OR^{13}$, $SR^{13}$, $NR^{13}{}_2$, dans lequel $R^{13}$ est un groupe alkyle linéaire ou ramifié en $C_1$-$C_6$, un groupe alkylaryle en $C_7$-$C_{20}$ et un groupe arylalkyle en $C_7$-$C_{20}$ ou un groupe aryle en $C_6$-$C_{20}$,
les $R^9$ sont chacun indépendamment identiques ou différents les uns des autres et sont H ou un groupe alkyle linéaire ou ramifié en $C_1$-$C_6$ ; et

$R^2$ et $R^6$ sont tous H ; et

(ii) un système de cocatalyseur comprenant un cocatalyseur à aluminoxane.

**15.** Utilisation d'une composition de polypropylène présentant un indice de fluidité à chaud MFR2 de 0,1 à 1,0 g/10 min, déterminé selon l'ISO 1133 sous une charge de 2,16 kg et à une température de 230 °C, et comprenant

(A) de 70 à 95 % en poids, sur la base du poids total de la composition de polypropylène, d'un copolymère de propylène avec des motifs comonomères dérivés du 1-butène ou du 1-hexène présentant

• une teneur totale en comonomère de 0,5 à 5,0 % en poids ;
• un indice de fluidité à chaud $MFR_2$ de 0,10 à 2,0 g/10 min, déterminé selon l'ISO 1133 sous une charge de 2,16 kg et à une température de 230 °C ; et
• un rapport poids moléculaire moyen en poids sur poids moléculaire moyen en nombre Mw/Mn de 2,5 à 6,0, déterminé par chromatographie par perméation sur gel (GPC) selon l'ISO 16014-4:2003 et l'ASTM D 6474-99 ; et
(B) de 5 à 30 % en poids, sur la base du poids total de la composition de polypropylène, d'un copolymère d'éthylène avec des motifs comonomères dérivés du 1-butène et/ou du 1-hexène présentant
• une teneur totale en comonomère de 1,0 à 25,0 % en poids ;
• une masse volumique de 910,0 à 940,0 $kg/m^3$, déterminée selon l'ISO 1183 ; et
• un indice de fluidité à chaud MFR2 de 0,05 à 3,0 g/10 min, déterminé selon l'ISO 1133 sous une charge de 2,16 kg et à une température de 190 °C, pour la production d'un tuyau.

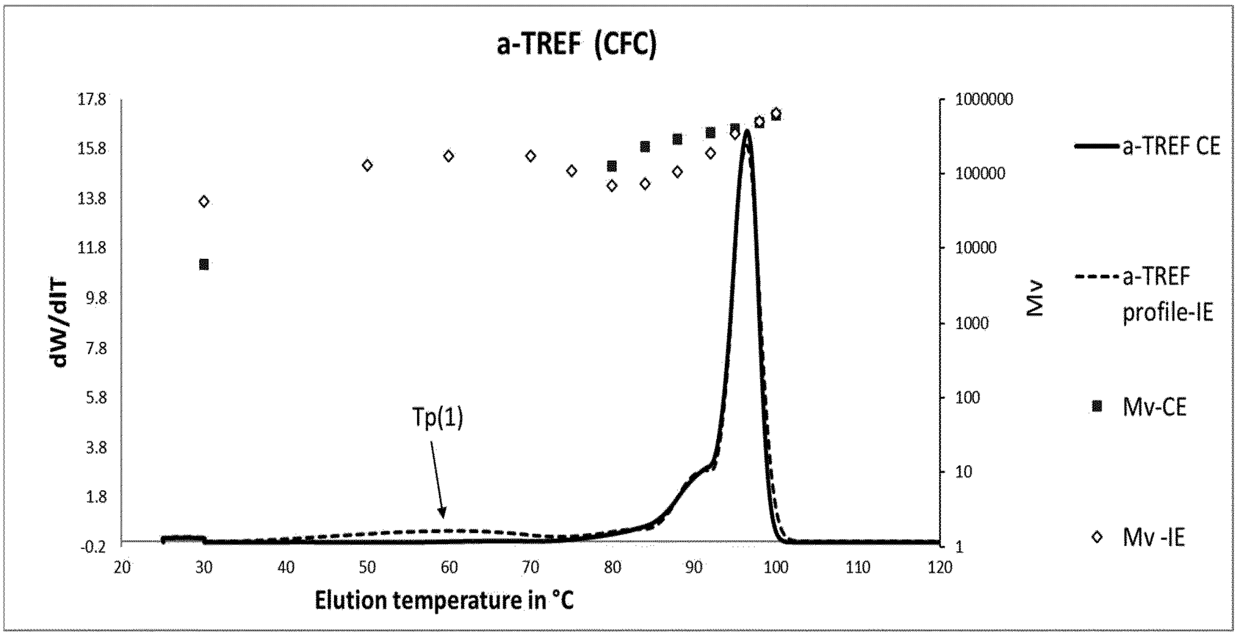
a-TREF (CFC)
17.8
15.8
13.8
11.8
9.8
7.8
5.8
3.8
1.8
-0.2
dW/dIT
1000000
100000
10000
1000
100
10
1
Mv
20
30
40
50
60
70
80
90
100
110
120
Elution temperature in °C
Tp(1)
a-TREF CE
a-TREF profile-IE
Mv-CE
Mv -IE

Figure 1

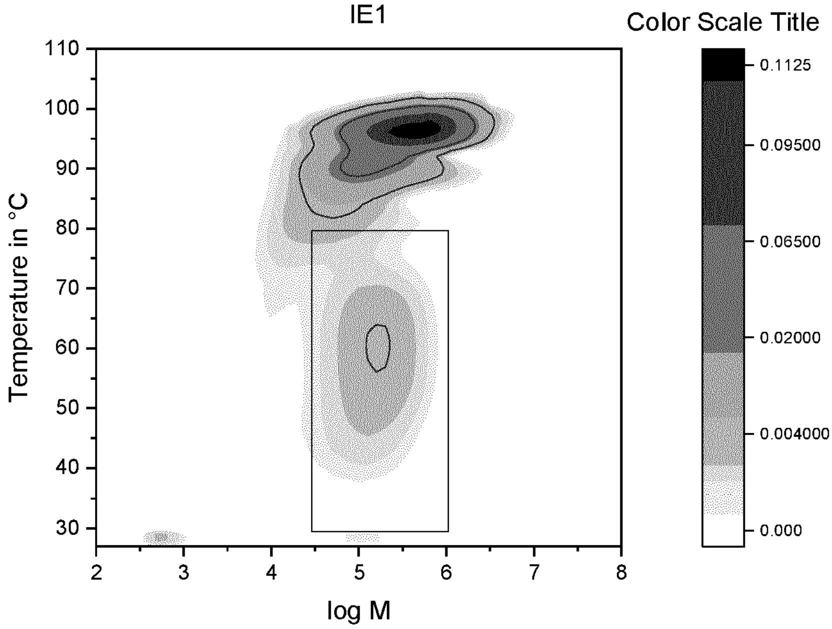


Figure 2

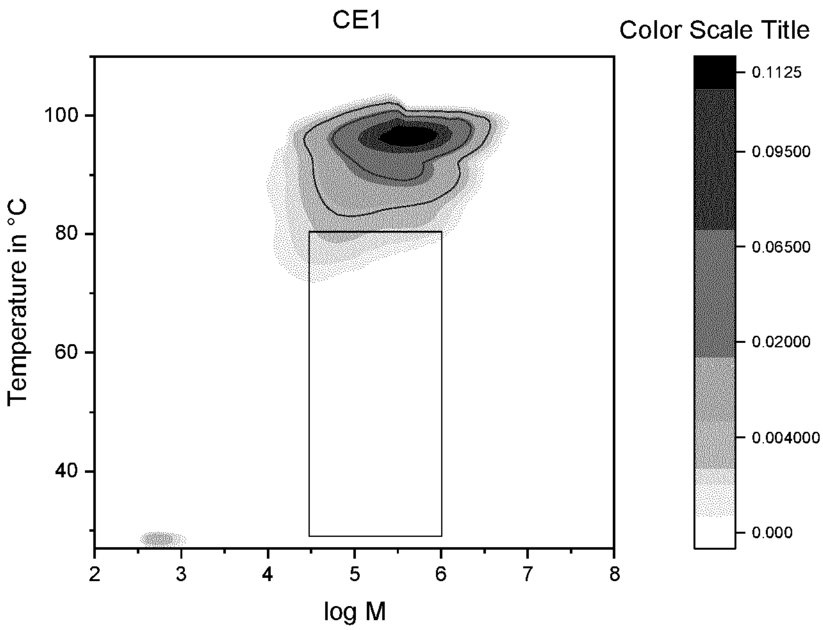


Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3567061 A1
- WO 2015011135 A
- WO 2013007650 A
- WO 2007116034 A
- WO 200202576 A
- WO 2011135004 A
- WO 2012084961 A
- WO 2012001052 A
- WO 2011076780 A
- WO 2015158790 A
- WO 9414856 A
- WO 9512622 A
- WO 2006097497 A
- WO 03051934 A
- WO 9632423 A
- WO 9728170 A
- WO 9832776 A
- WO 9961489 A
- WO 03010208 A
- WO 03051514 A
- WO 2004085499 A
- EP 1752462 A
- EP 1739103 A
- WO 9858976 A
- EP 887380 A
- WO 9858977 A
- WO 2006063771 A
- EP 428054 A
- GB 1580635 A
- WO 0066640 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- EP 1860125 A
- EP 887379 A
- EP 887381 A
- EP 991684 A
- WO 9212182 A
- WO 9618662 A
- WO 2007025640 A
- US 4543399 A
- EP 699213 A
- WO 9425495 A
- EP 696293 A
- WO 0026258 A
- US 4621952 A
- EP 188125 A
- EP 250169 A
- EP 579426 A
- EP 1600276 A
- WO 9815591 A
- WO 2015011135 A1
- WO 2013007650 A1
- EP 3257895 A1


### Non-patent literature cited in the description


- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 2373
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **RESCONI, L. ; CAVALLO, L. ; FAIT, A. ; PIEMONTESI, F.** *Chem. Rev.,* 2000, vol. 100, 1253
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **J. RANDALL.** *Macromol. Sci., Rev. Macromol. Chem. Phys.,* 1989, vol. C29, 201

- **ORTIN A. ; MONRABAL B. ; SANCHO-TELLO J.** *Macromol. Symp.,* 2007, vol. 257, 13-28
- *CHEMICAL ABSTRACTS,* 6683-19-8
- *CHEMICAL ABSTRACTS,* 31570-04-4